# EUROPÄISCHE PATENTSCHRIFT

(11) **EP 2 817 874 B1**
(45) Veröffentlichungstag und Bekanntmachung des Hinweises auf die Patenterteilung: **29.06.2016**
(21) Anmeldenummer: 13712489.7
(22) Anmeldetag: 20.02.2013
(51) Int. Cl.: H02M 3/158, G05F 3/08, H01F 30/12, H01F 30/14, H01F 38/14, H02M 3/22, H02M 1/00, H01F 27/38

(54) **KOPPLUNGSEINRICHTUNG FÜR EINEN MULTIPHASENWANDLER**
COUPLING DEVICE FOR A MULTI-PHASE CONVERTER
DISPOSITIF DE COUPLAGE POUR CONVERTISSEUR POLYPHASÉ

(30) Priorität: 20.02.2012 DE 102012202578
(43) Veröffentlichungstag der Anmeldung: 31.12.2014
(73) Patentinhaber: Robert Bosch GmbH, 70442 Stuttgart (DE)
(72) Erfinder: DRAESE, Nils, 70469 Feuerbach (DE); SCHINZEL, Mirko, 70378 Stuttgart (DE)
(86) Internationale Anmeldenummer: PCT/EP2013/053336
(87) Internationale Veröffentlichungsnummer: WO 2013/124294

(56) Entgegenhaltungen:
- EP-A1- 2 081 287

## Beschreibung

Die Erfindung betrifft eine Kopplungseinrichtung für einen Multiphasenwandler und einen Multiphasenwandler.

### Stand der Technik

Ein Leistungswandler, der auch als Gleichspannungswandler oder DC/DC-Wandler bezeichnet werden kann, ist dazu ausgebildet, eine Gleichspannung am Eingang in eine Gleichspannung mit anderem Spannungsniveau umzuwandeln. Ein derartiger Leistungswandler kann auch als Multiphasenwandler mit verkoppelten Induktivitäten ausgebildet sein. Verkoppelte Multiphasenwandler umfassen mehrere Phasen, wobei jede Phase durch einen stromdurchflossenen Leiter geführt ist, die durch magnetische Kopplungsmittel miteinander verkoppelt sind. Eine durch jede Phase erzeugte Stromwelligkeit durch die magnetische Kopplung kann jedoch den Betrieb des Multiphasenwandlers beeinträchtigen, weshalb Abschnitte der einzelnen Leiter zueinander geeignet anzuordnen sind, um bspw. Nachteile einer elektromagnetischen Verträglichkeit zu vermeiden.

Die Druckschrift WO 2012/028558 A1 beschreibt einen Multiphasenwandler, bei dem durch die magnetisch gegensinnige Kopplung einer Phase von zumindest sechs Phasen mit zumindest drei weiteren Phasen eine störende gegenseitige Beeinflussung der Phasen minimiert und ein großer Teil des magnetischen Flusses kompensiert wird. Die zu verkoppelnden Phasen werden dabei so ausgewählt, dass eine optimale Kompensation erreicht werden kann. Dies erfolgt durch ein gegenläufiges Stromprofil der Phasen. Ziel ist es hierbei, dass die Phasen magnetisch so gekoppelt werden, dass das resultierende Magnetfeld aufgrund der verkoppelten Phasen minimiert wird. Dabei wird ein Ferritkern zur Kopplung der magnetischen Flüsse verwendet, um von der hohen Permeabilität des Materials zu profitieren. Bei der hier vorgeschlagenen Kopplung können die Phasen der Reihe nach und voneinander unabhängig angesteuert werden.

Aus der EP-2081287 A1 ist bereits ein multiparalleler Transformator bekannt, welcher Kopplungsmodule mit parallelen Durchgangsöffnungen, welche die Leiter umschließen, umfasst.

### Offenbarung der Erfindung

Vor diesem Hintergrund werden eine Kopplungseinrichtung und ein Multiphasenwandler mit den Merkmalen der unabhängigen Patentansprüche vorgestellt. Weitere Ausgestaltungen der Erfindung ergeben sich aus den abhängigen Patentansprüchen und der Beschreibung.

In Ausgestaltung umfasst die kompakt aufgebaute Kopplungseinrichtung für den bspw. als Vierphasenwandler ausgebildeten Multiphasenwandler vier Phasen mit verkoppelten Induktivitäten. Hierbei weist die Kopplungseinrichtung vier als Kerne ausgebildete Kopplungsmodule auf, wobei pro Kopplungsmodul jeweils zumindest zwei Phasen in einer Ebene miteinander verkoppelt sind. Üblicherweise können zwei Kopplungsmodule in einer Ebene nebeneinander angeordnet sein. In einer dahinter liegenden bzw. angeordneten Ebene können zwei um 90° gedrehte Kopplungsmodule nebeneinander angeordnet sein. In einer Ebene ist jede der zumindest zwei Phasen mit jeweils zumindest einer weiteren Phase gekoppelt. Werden die Phasen versetzt angesteuert, ergibt bei einer üblicherweise endlosen Reihenfolge: erste Phase- zweite Phase- dritte Phase- vierte Phaseerste Phase- zweite Phase usw., zum Beispiel eine Verkopplung jeder Phase zu der ihr vorhergehenden Phase als Vorgänger sowie zu der ihr nachfolgenden Phase als Nachfolger.

Unabhängig von einer Anzahl der Phasen ist jedes elektronische Kopplungsmodul des Multiphasenwandlers flach bzw. planar ausgebildet und umfasst mindestens eine als Spulenkern und/oder Ferritkern ausgebildete Komponente. Eine derartige Komponente kann mindestens eine geschliffene Nut zur Bereitstellung einer Durchgangsöffnung aufweisen. In der Regel umfasst ein Kopplungsmodul mehrere Komponenten, wobei jeweils eine Durchgangsöffnung durch eine Nut in einer ersten Komponente und eine zweite Komponente umschlossen sein kann. Dabei können zwei benachbarte Durchgangsöffnungen eines Kopplungsmoduls jeweils über einen Schlitz, der bspw. als Luftspalt ausgebildet ist, miteinander verbunden sein. In dem Schlitz kann ohne besonderen mechanischen Aufwand für jede durchströmende Phase ein Streufluss definiert werden. Dadurch kann für den Multiphasenwandler ein optimiertes EMV-Verhalten und somit eine optimierte elektromagnetische Verträglichkeit erreicht werden.

Außerdem kann vorgesehen sein, dass durch ein Kopplungsmodul pro Phase zwei Windungen und somit zwei Abschnitte einer für die Phase vorgesehenen Leiterschleife geführt sind, daraus ergibt sich eine reduzierte magnetische Aussteuerung des Kopplungsmoduls durch Spannungszeitintegrale, bspw. Spannungszeitflächen, der magnetischen Flüsse der Phasen sowie sehr geringe Kernverluste. In der Regel ist es nicht erforderlich, die Kopplungsmodule zu kühlen. Jede Leiterschleife für eine Phase weist einen metallischen Draht auf, der mit Isolationsmaterial umhüllt ist. An jeder Leiterschleife liegt eine für die Phase vorgesehene Spannung an. Außerdem fließt durch jede Leiterschleife ein für die Phase vorgesehener Strom.

Jede Durchgangsöffnung eines Kopplungsmoduls, das bspw. zwei derartige Durchgangsöffnungen umfasst, kann zudem ein großes Wickelfenster aufweisen, in das optional ein Kupferstück mit großem Querschnitt eingebracht sein kann, wodurch Wicklungswiderstände im Bereich von weniger als 1 mOhm bis zu wenigen mOhm ermöglicht werden können.

Weiterhin umfasst mindestens ein Hauptpfad des Multiphasenwandlers zwei Abschnitte bzw. Windungen einer Leiterschleife pro Phase, wobei jede Phase entlang des mindestens einen Hauptpfads durch hochpermeables Material des Kopplungsmoduls umschlossen ist, so dass entlang dem mindestens einen Hauptpfad kein oder im Vergleich zu einem Streupfad nur ein sehr kleiner Luftspalt als Schlitz, der eine geringe Breite aufweist, vorgesehen ist. Dadurch können mit nur zwei Windungen Induktivitäten, im Bereich von typischerweise 10 µH bis 50 µH realisiert werden.

Der Multiphasenwandler kann als Niederspannungswandler ausgebildet sein und im automotiven Bereich eingesetzt werden, wobei hohe Leistungen und Wirkungsgrade erreicht werden können. Leiterschleifen zur Bereitstellung der Phasen können als Drähte aus Kupfer sein, die einen geringen elektrischen Widerstand aufweisen, wodurch der Wirkungsgrad des Vierphasenwandlers erhöht wird. Die Drähte können zudem mit Kunststoff oder Lack ummantelt sein. Der Vierphasenwandler weist zudem geringe Ruheverluste und dadurch bei Minderlast einen hohen Wirkungsgrad auf. Durch die vorgesehene Verkopplung der Phasen kann eine hohe Dynamik erreicht werden. Ein Streufluss der üblicherweise vier Phasen des als Vierphasenwandler ausgebildeten Multiphasenwandlers kann durch Dimensionierung eines Schlitzes zwischen zwei benachbarten Durchgangsöffnungen einfach angepasst werden, wodurch die elektromagnetische Verträglichkeit an Lastforderungen angepasst werden kann. Außerdem sind die Leiterschleifen kurz, da jede Phase direkt dort aus jenem Kopplungsmodul herausgeführt ist, in den sie auch wieder hinein geführt ist. Dadurch kann eine Phase direkt mit einem und/oder über einen Kondensator an eine Schaltzelle angeschlossen werden, was die elektromagnetische Verträglichkeit begünstigt.

Somit ist es in Ausgestaltung möglich, einen Vierphasenwandler und somit einen vier-phasigen Multiphasenwandler bereitzustellen, bei dem Induktivitäten der vier Phasen über vier Kopplungsmodule verkoppelt sind. Mit dem Vierphasenwandler wird ein Verkopplungskonzept realisiert, das für Hochleistungswandler geeignet und für Anforderungen im automotiven Bereich ausgelegt ist.

Da in dieser Ausführungsform lediglich vier Phasen verkoppelt sind, sollte im Gegensatz zu Multiphasenwandlern, die mehr als vier Phasen umfassen, eine zu hohe Verkopplung vermieden werden, um Probleme hinsichtlich der elektromagnetischen Verträglichkeit durch eine zu gute Kopplung zu reduzieren. Dies ist durch einen zusätzlichen Streupfad für einen Streufluss möglich. Weiterhin ist der Vierphasenwandler einfach und kompakt aufgebaut, wodurch Fertigungskosten eingespart werden können. Ein in den Vierphasenwandler geführter Anfang einer Leiterschleife für jeweils eine Phase und ein aus dem Vierphasenwandler geführtes Ende der Leiterschleife liegen räumlich nahe beieinander, so dass im Vergleich zu Abschnitten einer Leiterschleife, durch die die Phase geführt ist und die voneinander zu weit beabstandet sind, Nachteile für die elektromagnetische Verträglichkeit verringert werden. Falls der Vierphasenwandler im Leerlauf betrieben wird, können weiterhin hohe Kernverluste vermieden und demnach ein Wirkungsgrad bei einer Minderlast verbessert werden.

In weiterer Ausgestaltung kann die Anzahl der Abschnitte bzw. Wicklungen einer Leiterschleife, die auf ein Kopplungsmodul aufzubringen ist, variiert werden. Ebenso kann eine Führung der einzelnen Phasen außerhalb der Kopplungsmodule des Multiphasenwandlers flexibel eingestellt werden. Somit können Anschlüsse, d. h. ein Anfang und ein Ende der einzelnen Phasen, auf beiden Seiten zumindest eines Kopplungsmoduls verteilt liegen. Es ist auch möglich, alle Phasen auf einer Seite von zumindest einem Kopplungsmodul zu kontaktieren.

Ferner können die Phasen bei einer weiteren Ausgestaltung der vorgestellten Kupplungseinrichtung gegenläufige Stromprofile aufweisen, wobei durch magnetische Kopplung der Phasen eine Stärke des resultierenden Magnetfelds reduziert wird. Zudem können bei einem Betrieb des Multiphasenwandlers, der mindestens eine Kopplungseinrichtung für die Phasen aufweist, die Phasen einer vorgesehenen Reihenfolge entsprechend nacheinander sowie voneinander unabhängig angesteuert werden.

Weitere Vorteile und Ausgestaltungen der Erfindung ergeben sich aus der Beschreibung und den beiliegenden Zeichnungen.

### Kurze Beschreibung der Zeichnungen

Figur 1 zeigt in schematischer Darstellung eine erste Ausführungsform der Kopplungseinrichtung für eine erste Ausführungsform des Multiphasenwandlers aus verschiedenen Perspektiven.
Figur 2 zeigt in schematischer Darstellung eine zweite Ausführungsform der Kopplungseinrichtung für eine zweite Ausführungsform des Multiphasenwandlers aus verschiedenen Perspektiven.
Figur 3 zeigt in schematischer Darstellung eine dritte Ausführungsform der Kopplungseinrichtung für eine dritte Ausführungsform des Multiphasenwandlers aus verschiedenen Perspektiven.
Figur 4 zeigt in schematischer Darstellung ein Detail einer vierten Ausführungsform der Kopplungseinrichtung für eine vierte Ausführungsform des Multiphasenwandlers aus verschiedenen Perspektiven.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

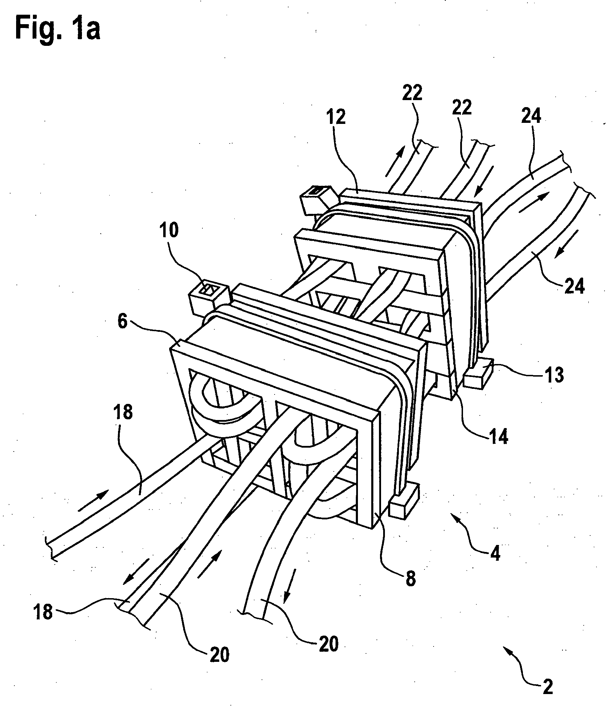

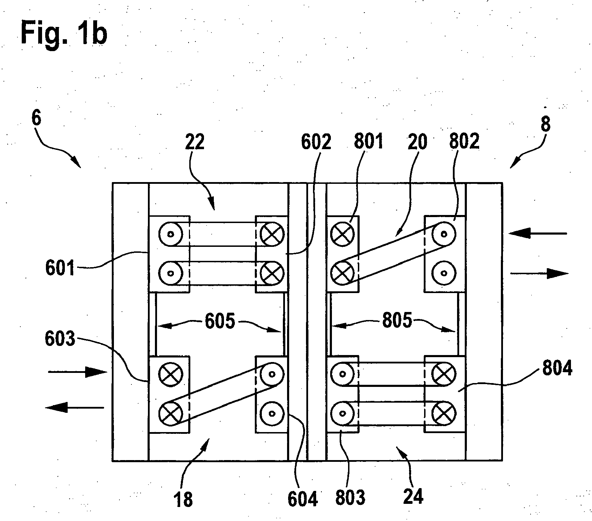

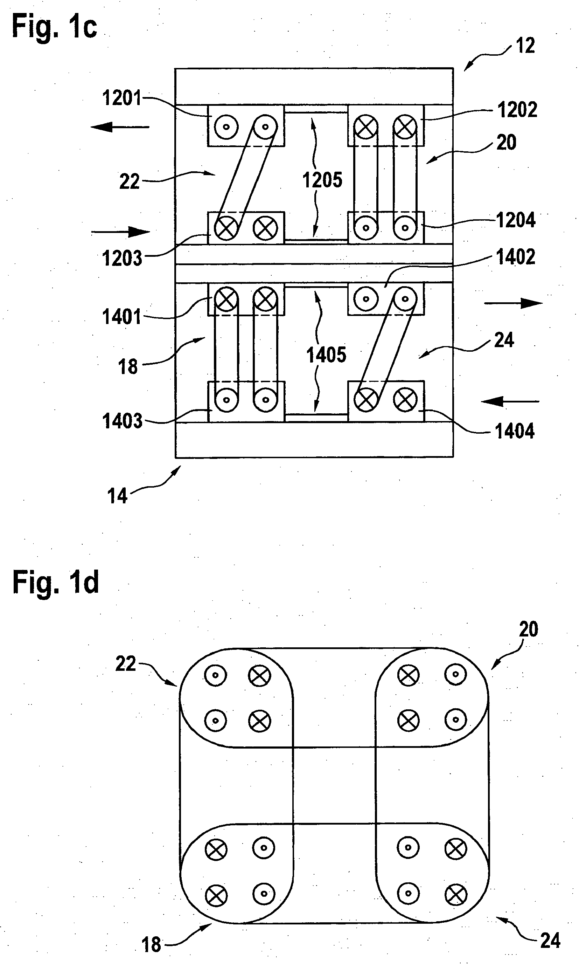

Die in Figur 1 schematisch dargestellte erste Ausführungsform des hier als Vierphasenwandler ausgebildeten Multiphasenwandlers 2 umfasst eine Kopplungseinrichtung 4 für vier Phasen, die elektrische Spannungen aufweisen. Die Spannung einer Phase und ein Strom, der durch die Phase fließt, können an einer Phase variieren. Folglich kann die Spannung einer Phase eine Gleichspannung mit überlagertem Wechselanteil sein, der einige Prozent eines Werts der Gleichspannung betragen kann. In Ausgestaltung kann eine Spannung einer Phase als getaktete Gleichspannung ausgebildet sein.

Dabei umfasst die Kopplungseinrichtung 4 ein erstes und ein zweites Kopplungsmodul 6, 8, die voneinander magnetisch entkoppelt sein können und folglich magnetisch miteinander nicht vekoppelt sein müssen. Außerdem umfasst die Kopplungseinrichtung 4 ein drittes und ein viertes Kopplungsmodul 12, 14, die ebenfalls voneinander magnetisch entkoppelt sein können und demnach nicht miteinander magnetisch verbunden sein müssen.

Figur 1 zeigt zudem zwei Bänder 10, 13, durch die Kopplungsmodule 6 und 8 bzw. 12 und 14 als magnetische Kreise verbunden sowie geschlossen werden. Alternativ zu den Bändern 10,13 können die Kopplungsmodule 6, 8, 12, 14 auch durch Kleben oder durch Federn geschlossen werden.

Weiterhin umfasst die Kopplungseinrichtung 4 eine erste kunststoffummantelte Leiterschleife 18 für eine erste Phase, eine zweite kunststoffummantelte Leiterschleife 20 für eine zweite Phase, eine dritte kunststoffummantelte Leiterschleife 22 für eine dritte Phase und eine vierte kunststoffummantelte Leiterschleife 24 für eine vierte Phase. Statt einer Kunststoffummantelung können auch alle anderen Beschichtungen zum Isolieren der Leiterschleifen 18, 20, 22, 24 genutzt werden, um eine elektrisch leitende Verbindung zwischen den Leiterschleifen 18, 20, 22, 24 untereinander und zu einem Ferritkern eines Kopplungsmoduls 6, 8, 12, 14 zu unterbinden.

In Figur 1a ist die Kopplungseinrichtung 4 von der Seite dargestellt. Figur 1b zeigt das erste und das zweite Kopplungsmodul 6, 8 von der Vorderseite, d. h. von oben. Figur 1c zeigt das dritte und vierte Kopplungsmodul 12, 14 von unten und somit von der Rückseite. Demnach sind Rückseiten des ersten und zweiten Kopplungsmoduls 6, 8 Vorderseiten des dritten und vierten Kopplungsmoduls 12, 14 zugewandt. In Figur 1d ist ein Übergang und somit eine Verkopplung der durch die vier Leiterschleifen 18, 20, 22, 24 strömenden Phasen zwischen dem ersten und zweiten Kopplungsmodul 6, 8 einerseits sowie dem dritten und vierten Kopplungsmodul 12, 14 andererseits, aus Richtung der Vorderseite betrachtet, dargestellt.

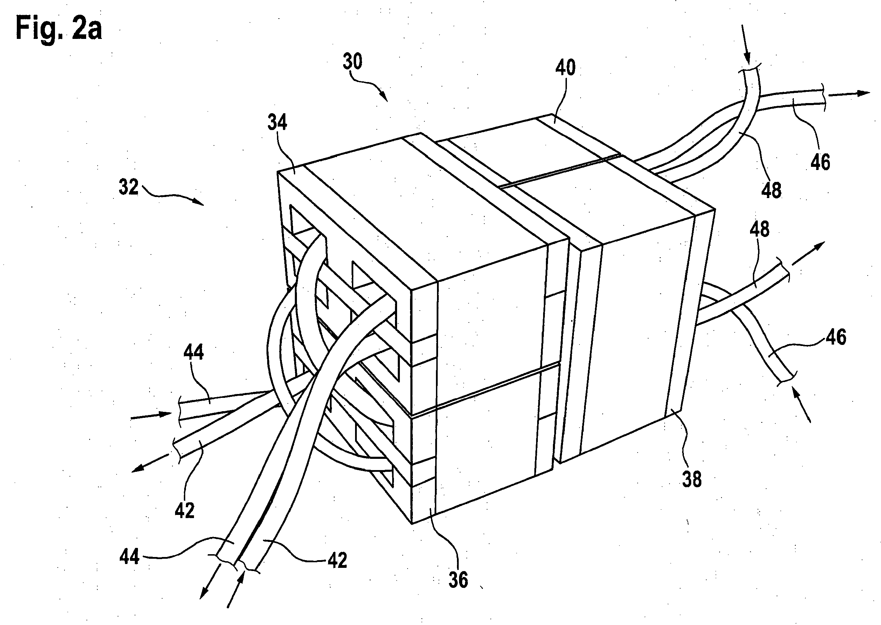

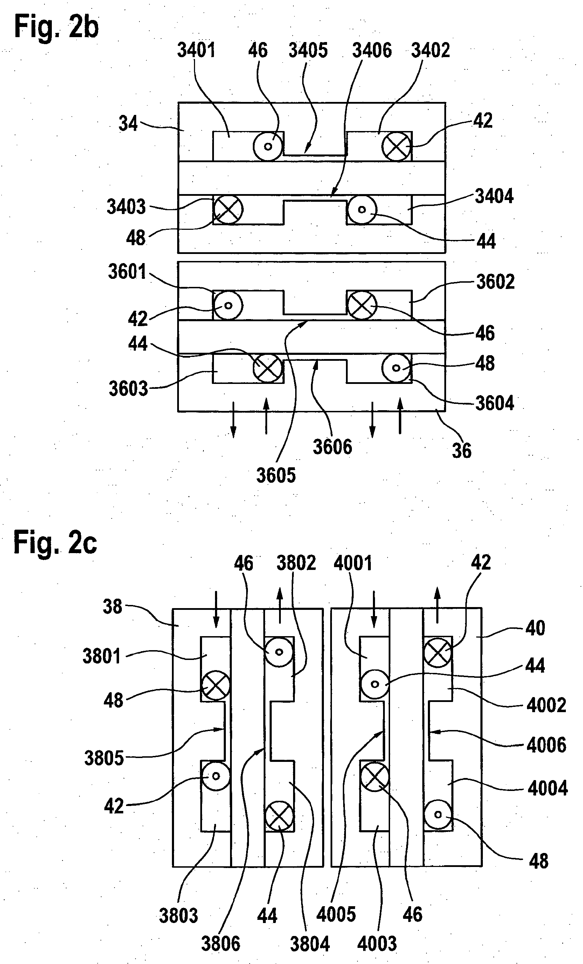

Richtungen, in denen die Phasen bei Betrieb des Multiphasenwandlers 2 durch die Leiterschleifen 18, 20, 22, 24 der Kopplungseinrichtung 4 strömen, sind entlang den Leiterschleifen 18, 20, 22, 24 durch Pfeile angedeutet. Weiterhin ist in den Figuren 1 b, 1 c und 1 d durch eingekreiste Kreuze angedeutet, wo die zu transportierenden Phasen durch Abschnitte von Leiterschleifen 18, 20, 22, 24 in die Zeichenebene hineinströmen. Durch eingekreiste Punkte ist angedeutet, wo die zu transportierenden Phasen durch Abschnitte von Leiterschleifen 18, 20, 22, 24 aus der Zeichenebene herausströmen. Dabei können Richtungen für Ströme der Phasen auch vertauscht sein. In diesem Fall sind in Figur 1 sowie auch in der Darstellung der weiteren Figuren 2 bis 4 jeweils Kreuze mit Punkten und Punkte mit Kreuzen zu vertauschen. Unabhängig von konkreten Stromrichtungen von Phasen, die durch die Leiterschleifen 18, 20, 22, 24 strömen, sind diese in jedem Hauptkreis eines Kopplungsmoduls 6, 8, 12, 14 entgegengesetzt und heben sich gegenseitig auf.

Weiterhin weist das erste Kopplungsmodul 6 eine erste Durchgangsöffnung 601, eine zweite Durchgangsöffnung 602, eine dritte Durchgangsöffnung 603 und eine vierte Durchgangsöffnung 604 auf, wobei hier die erste und die dritte Durchgangsöffnung 601, 603 sowie die zweite und die vierte Durchgangsöffnung 602, 604 jeweils über einen Schlitz 605 miteinander verbunden sind. Das zweite Kopplungsmodul 8 umfasst eine erste Durchgangsöffnung 801, eine zweite Durchgangsöffnung 802, eine dritte Durchgangsöffnung 803 und eine vierte Durchgangsöffnung 804, wobei hier die erste und die dritte Durchgangsöffnung 801, 803 sowie die zweite und die vierte Durchgangsöffnung 802, 804 jeweils über einen Schlitz 805, der als Luftspalt ausgebildet sein kann, miteinander verbunden sind. Hier ist vorgesehen, dass das erste und das zweite Kopplungsmodul 6, 8 eine erste Ebene der Kopplungseinrichtung 4 bilden, wobei die insgesamt acht Durchgangsöffnungen 601, 602, 603, 604, 801, 802, 803, 804 zueinander parallel orientiert durch die erste Ebene weitgehend senkrecht geführt sind.

Längsachsen des dritten und vierten Kopplungsmoduls 12, 14 sind zu Längsachsen des ersten und zweiten Kopplungsmoduls 6, 8 um 90° gedreht. Das dritte Kopplungsmodul 12 weist eine erste Durchgangsöffnung 1201, eine zweite Durchgangsöffnung 1202, eine dritte Durchgangsöffnung 1203 und eine vierte Durchgangsöffnung 1204 auf, wobei hier die erste und die zweite Durchgangsöffnung 1201, 1202 sowie die dritte und die vierte Durchgangsöffnung 1203, 1204 jeweils über einen Schlitz 1205 miteinander verbunden sind. Das vierte Kopplungsmodul 14 umfasst eine erste Durchgangsöffnung 1401, eine zweite Durchgangsöffnung 1402, eine dritte Durchgangsöffnung 1403 und eine vierte Durchgangsöffnung 1404, wobei hier die erste und die zweite Durchgangsöffnung 1401,1402 sowie die dritte und die vierte Durchgangsöffnung 1403, 1404 jeweils über einen Schlitz 1405 miteinander verbunden sind. Eine zweite Ebene der Kopplungseinrichtung 4 ist durch das dritte und vierte Kopplungsmodul 12, 14 gebildet, wobei die insgesamt acht Durchgangsöffnungen 1201, 1202, 1203, 1204, 1401, 1402, 1403, 1404 zueinander parallel orientiert durch die zweite Ebene weitgehend senkrecht geführt sind.

Jeder Schlitz 605, 805, 1205, 1405 zwischen den jeweiligen Durchgangsöffnungen 601, 602, 603, 604, 801, 802, 803, 804, 1201, 1202, 1203, 1204, 1401, 1402, 1403, 1404 wird durch das Einschleifen eines Luftspalts mit einer Dicke im Bereich von ca. 0,1 bis 2 mm bereitgestellt, wodurch für den Streufluss der einzelnen Phasen ein hoher magnetischer Widerstand erzeugt wird. Durch geeignete Wahl eines als Luftspalt ausgebildeten Schlitzes 605, 805, 1205, 1405 mit geringer Breite und einem daraus resultierenden Streufluss kann das Verhalten hinsichtlich einer elektromagnetischen Verträglichkeit verbessert werden. Dabei ist jedoch zu vermeiden, dass durch den entstehenden Streufluss Kernmaterial der Komponenten eines Kopplungsmoduls 6, 8, 12, 14 ab einem bestimmten Strom, der die Phasen durchströmt, gesättigt wird. Abhängig von der Anforderung des jeweiligen Anwendungsfalls ist dadurch möglich, zwischen einem Verhalten der elektromagnetischen Verträglichkeit und einer Leistungsfähigkeit des Multiphasenwandlers 2 abzuwägen.

Des weiteren ist es möglich, eine magnetische Querschnittsfläche des Kernmaterials im Bereich eines Schlitzes 605, 805, 1205, 1405 zu reduzieren. In Folge dessen kann ab einer bestimmten Last (Überlast) des Multiphasenwandlers 2 vorgesehen sein, dass nur ein Bereich des Streuflusses entlang eines Streupfads durch die reduzierte Querschnittsfläche eines Schlitzes 605, 805, 1205, 1405 gesättigt wird. Ein Hauptpfad für einen magnetischen Hauptfluss eines Kopplungsmoduls 6, 8, 12, 14 bleibt davon unbeeinflusst. Im Falle einer Überlastung wird sich dann lediglich die elektromagnetische Verträglichkeit des Multiphasenwandlers 2 verschlechtern. Im Gegensatz zu konventionellen unverkoppelten Wandlern wird hier ein Hauptpfad eines Kopplungsmoduls 6, 8, 12, 14 nicht in Sättigung gehen, wodurch eine Zerstörung oder Fehlfunktion verhindert werden kann.

Zusätzlich können einzelne Schlitze 605, 805, 1205, 1405 eines Kopplungsmoduls 6, 8, 12, 14 zur Bereitstellung von Klebespalten miteinander verklebt werden. Derartige Klebespalte können in bestimmten Abständen zueinander realisiert werden. So können Schlitze 605, 805, 1205, 1405 abwechselnd als Luftspalte und Klebespalte ausgebildet sein. Hierzu kann in einen als Klebespalt auszubildenden Schlitz 605, 805, 1205, 1405 Klebstoff gefüllt oder eine Folie eingeklebt werden. Dadurch reduziert sich die Induktivität einer Phase. Werte für Induktivitäten, die größer als 50 µH sind und mit einem Luftspalt statt einem Klebespalt erreicht werden können, sind für den Betrieb des Multiphasenwandlers 2 nicht nötig. Eine Reduktion der Induktivität der Phasen auf Werte von z. B. 10 bis 20 µH reicht für einen EMV-optimierten Betrieb immer noch aus. Dies führt zu einem robusten Verhalten des Multiphasenwandlers 2 und damit zu einem kostengünstigeren Gesamtkonzept.

Die erste Phase durch die erste Leiterschleife 18 ist folgendermaßen durch die Kopplungseinrichtung 4 geführt:
- durch die Vorderseite des ersten Kopplungsmoduls 6 in die dritte Durchgangsöffnung 603 hinein und aus der Rückseite wieder heraus,
- durch Vorderseite des vierten Kopplungsmoduls 14 in die dritte Durchgangsöffnung 1403 hinein und aus der Rückseite wieder heraus,
- durch die Rückseite des vierten Kopplungsmoduls 14 in die erste Durchgangsöffnung 1401 hinein und aus der Vorderseite wieder heraus,
- durch der Rückseite des ersten Kopplungsmoduls 6 in die vierte Durchgangsöffnung 604 hinein und aus der Vorderseite wieder heraus,
- durch die Vorderseite des ersten Kopplungsmoduls 6 wieder in die dritte Durchgangsöffnung 603 hinein und aus der Rückseite wieder heraus,
- durch die Vorderseite des vierten Kopplungsmoduls 14 in die dritte Durchgangsöffnung 1403 hinein und aus der Rückseite wieder heraus,
- durch die Rückseite des vierten Kopplungsmoduls 14 in die erste Durchgangsöffnung 1401 hinein und aus der Vorderseite wieder heraus,
- durch die Rückseite des ersten Kopplungsmoduls 6 in die vierte Durchgangsöffnung 604 hinein und aus der Vorderseite wieder heraus.

Daraus ergibt sich, dass die durch die erste Leiterschleife 18 zu transportierende erste Phase durch die dritte und vierte Durchgangsöffnung 603, 604 des ersten Kopplungsmoduls 6 sowie die erste und dritte Durchgangsöffnung 1401, 1403 des vierten Kopplungsmoduls 14 geführt ist, wobei die erste Phase durch jede dieser vier Durchgangsöffnungen 603, 604, 1401, 1403 zweimal in derselben Richtung geführt ist. Weiterhin ist die erste Phase durch die dritte Durchgangsöffnung 603 des ersten Kopplungsmoduls 6 zweimal in einer ersten Richtung durch die Vorderseite und durch die vierte Durchgangsöffnung 604 des ersten Kopplungsmoduls 6 zweimal in einer zweiten Richtung durch die Rückseite, die der ersten Richtung entgegengesetzt ist, geführt. Außerdem ist die erste Phase durch die dritte Durchgangsöffnung 1403 des vierten Kopplungsmoduls 14 zweimal in der ersten Richtung durch die Vorderseite hinein und durch die erste Durchgangsöffnung 1401 des vierten Kopplungsmoduls 14 zweimal in der zweiten, entgegengesetzten Richtung durch die Rückseite geführt.

Zum Transport der zweiten Phase ist folgende Führung durch die zweite Leiterschleife 20 der Kopplungseinrichtung 4 vorgesehen:
- durch die Vorderseite des zweiten Kopplungsmoduls 8 in die erste Durchgangsöffnung 801 hinein und aus der Rückseite wieder heraus,
- durch die Vorderseite des dritten Kopplungsmoduls 12 in die vierte Durchgangsöffnung 1204 hinein und aus der Rückseite wieder heraus,
- durch die Rückseite des dritten Kopplungsmoduls 12 in die zweite Durchgangsöffnung 1202 hinein und aus der Vorderseite wieder heraus,
- durch die Rückseite des zweiten Kopplungsmoduls 8 in die zweite Durchgangsöffnung 802 hinein und aus der Vorderseite wieder heraus,
- durch die Vorderseite des zweiten Kopplungsmoduls 8 in die erste Durchgangsöffnung 801 hinein und aus der Rückseite wieder heraus,
- durch die Vorderseite des dritten Kopplungsmoduls 12 in die vierte Durchgangsöffnung 1204 hinein und aus der Rückseite wieder heraus,
- durch die Rückseite des dritten Kopplungsmoduls 12 in die zweite Durchgangsöffnung 1202 hinein und aus der Vorderseite wieder heraus,
- durch die Rückseite des zweiten Kopplungsmoduls 8 in die zweite Durchgangsöffnung 802 hinein und aus der Vorderseite wieder heraus.

Folglich ist die durch die zweite Leiterschleife 20 zu transportierende zweite Phase durch die erste und zweite Durchgangsöffnung 801, 802 des zweiten Kopplungsmoduls 8 sowie die zweite und vierte Durchgangsöffnung 1202, 1204 des dritten Kopplungsmoduls 12 geführt, wobei die zweite Phase durch jede dieser vier Durchgangsöffnungen 801, 802, 1202, 1204 zweimal in derselben Richtung geführt ist. Weiterhin ist die zweite Phase durch die erste Durchgangsöffnung 801 des zweiten Kopplungsmoduls 8 zweimal in einer ersten Richtung durch die Vorderseite und durch die zweite Durchgangsöffnung 802 des zweiten Kopplungsmoduls 8 zweimal durch die Rückseite in einer zweiten Richtung, die der ersten Richtung entgegengesetzt ist, geführt. Außerdem ist die zweite Phase durch die zweite Durchgangsöffnung 1202 des dritten Kopplungsmoduls 14 zweimal in der zweiten Richtung und durch die vierte Durchgangsöffnung 1204 des dritten Kopplungsmoduls 12 zweimal in der ersten Richtung geführt.

Eine Richtung zum Transport der dritten Phase durch die dritte Leiterschleife 22 ist, wie nachfolgend beschrieben, orientiert:
- durch die Rückseite des dritten Kopplungsmoduls 12 in die dritte Durchgangsöffnung 1203 hinein und aus der Vorderseite wieder heraus,
- durch die Rückseite des ersten Kopplungsmoduls 6 in die erste Durchgangsöffnung 601 hinein und aus der Vorderseite wieder heraus,
- durch die Vorderseite des ersten Kopplungsmoduls 6 in die zweite Durchgangsöffnung 602 hinein und aus der Rückseite wieder heraus,
- durch die Vorderseite des dritten Kopplungsmoduls 12 in die erste Durchgangsöffnung 1201 hinein und aus der Rückseite wieder heraus,
- durch die Rückseite des dritten Kopplungsmoduls 12 in die dritte Durchgangsöffnung 1203 hinein und aus der Vorderseite wieder heraus,
- durch die Rückseite des ersten Kopplungsmoduls 6 in die erste Durchgangsöffnung 601 hinein und aus der Vorderseite wieder heraus,
- durch die Vorderseite des ersten Kopplungsmoduls 6 in die zweite Durchgangsöffnung 602 hinein und durch die Rückseite wieder heraus,
- durch die Vorderseite des dritten Kopplungsmoduls 12 in die erste Durchgangsöffnung 1201 hinein und aus der Rückseite wieder heraus.

Demnach ist die durch die dritte Leiterschleife 22 zu transportierende dritte Phase jeweils zweimal durch die erste und zweite Durchgangsöffnung 601, 602 des ersten Kopplungsmoduls 6 sowie durch die erste und dritte Durchgangsöffnung 1201, 1203 des dritten Kopplungsmoduls 12 geführt, wobei die dritte Phase durch jede dieser vier Durchgangsöffnungen 601, 602, 1201, 1203 zweimal in derselben Richtung geführt ist. Im Detail ist die dritte Phase durch die zweite Durchgangsöffnung 602 des ersten Kopplungsmoduls 6 sowie durch die erste Durchgangsöffnung 1201 des dritten Kopplungsmoduls 12 in der ersten Richtung durch die Vorderseite geführt, wohingegen die dritte Phase durch die erste Durchgangsöffnung 601 des ersten Kopplungsmoduls 6 sowie durch die dritte Durchgangsöffnung 1203 des dritten Kopplungsmoduls 12 in einer der ersten Richtung entgegengesetzten Richtung jeweils durch die Rückseite geführt ist.

Zum Transport der vierten Phase durch die vierte Leiterschleife 24 gilt folgende Führung durch die Kopplungseinrichtung 4:
- durch die Rückseite des vierten Kopplungsmoduls 14 in die vierte Durchgangsöffnung 1404 hinein und aus der Vorderseite wieder heraus,
- durch die Rückseite des zweiten Kopplungsmoduls 8 in die dritte Durchgangsöffnung 803 hinein und aus der Vorderseite wieder heraus,
- durch die Vorderseite des zweiten Kopplungsmoduls 8 in die vierte Durchgangsöffnung 804 hinein und aus der Rückseite wieder heraus,
- durch die Vorderseite des vierten Kopplungsmoduls 14 in die zweite Durchgangsöffnung 1402 hinein und aus der Rückseite wieder heraus,
- durch die Rückseite des vierten Kopplungsmoduls 14 in die vierte Durchgangsöffnung 1404 hinein und aus der Vorderseite wieder heraus,
- durch die Rückseite des zweiten Kopplungsmoduls 8 in die dritte Durchgangsöffnung 803 hinein und aus der Vorderseite wieder heraus,
- durch die Vorderseite des zweiten Kopplungsmoduls 8 in die vierte Durchgangsöffnung 804 hinein und durch die Rückseite wieder heraus,
- durch die Vorderseite des vierten Kopplungsmoduls 12 in die zweite Durchgangsöffnung 1402 hinein und aus der Rückseite wieder heraus.

Zusammenfassend ist die durch die vierte Leiterschleife 24 zu transportierende vierte Phase durch die dritte und vierte Durchgangsöffnung 803, 804 des zweiten Kopplungsmoduls 8 sowie durch die zweite und vierte Durchgangsöffnung 1402, 1404 des vierten Kopplungsmoduls 14 jeweils zweimal in derselben Richtung geführt. Dabei ist die vierte Phase durch die vierte Durchgangsöffnung 804 des zweiten Kopplungsmoduls 8 und die zweite Durchgangsöffnung 1402 des vierten Kopplungsmoduls 14 in der ersten Richtung durch die Vorderseite des jeweiligen Kopplungsmoduls 14 geführt. Im Gegensatz hierzu ist die vierte Phase durch die dritte Durchgangsöffnung 803 des zweiten Kopplungsmoduls 8 und durch die vierte Durchgangsöffnung 1404 des vierten Kopplungsmoduls 14 durch die Rückseite in der zweiten Richtung entgegen der ersten Richtung geführt.

Jede Leiterschleife 18, 20, 22, 24 ist jeweils zweifach durch zwei Durchgangsöffnungen 601, 602, 603, 604, 801, 802, 803, 804, 1201, 1202, 1203, 1204, 1401, 1402, 1403, 1404 von zwei der vier Kopplungsmodule 6, 8, 12, 14 geführt. Somit sind durch die insgesamt vier Durchgangsöffnungen 601, 602, 603, 604, 801, 802, 803, 804, 1201, 1202, 1203, 1204, 1401, 1402, 1403, 1404 eines Kopplungsmoduls 6, 8, 12, 14 lediglich Abschnitte von zwei Leiterschleifen 18, 20, 22, 24 geführt, nämlich durch Durchgangsöffnungen 601, 602, 603, 604 des ersten Kopplungsmoduls 6 Abschnitte der ersten und dritten Leiterschleife 18, 22, durch Durchgangsöffnungen 801, 802, 803, 804 des zweiten Kopplungsmoduls 8 Abschnitte der zweiten und vierten Leiterschleife 20, 24, durch Durchgangsöffnungen 1201, 1202, 1203, 1204 des dritten Kopplungsmoduls 12 Abschnitte der zweiten und dritten Leiterschleife 20, 22 sowie durch Durchgangsöffnungen 1401, 1402, 1403, 1404 des vierten Kopplungsmoduls 14 Abschnitte der ersten und vierten Leiterschleife 18, 24. Außerdem umfasst eine erste Ebene der Kopplungseinrichtung 4 das erste und das zweite Kopplungsmodul 6, 8 (Figur 1 b). Eine zweite Ebene der Kopplungseinrichtung 4 umfasst das dritte und das vierte Kopplungsmodul 12, 14 (Figur 1c). Dabei ist jede durch eine Leiterschleife 18, 20, 22, 24 zu transportierende Phase durch jede Ebene insgesamt viermal, zweimal in der ersten Richtung und zweimal in der zweiten Richtung geführt.

Es ist vorgesehen, dass der Multiphasenwandler 2 als Spannungswandler ausgebildet ist. Bei einem Betrieb des Multiphasenwandlers durchströmen die vier Phasen die Durchgangsöffnungen 601, 602, 603, 604, 801, 802, 803, 804, 1201, 1202, 1203, 1204, 1401, 1402, 1403, 1404 der vier Kopplungsmodule 6, 8, 12, 14 gemäß der voranstehend beschriebenen Reihenfolgen und Richtungen.

Eine durch eine Leiterschleife 18, 20, 22, 24 zu transportierende Phase ist durch eine Durchgangsöffnung 601, 602, 603, 604, 801, 802, 803, 804, 1201, 1202, 1203, 1204, 1401, 1402, 1403, 1404 eines Kopplungsmoduls 6, 8, 12, 14 in einer Ebene zweimal in der ersten Richtung und durch eine benachbarte Durchgangsöffnung 601, 602, 603, 604, 801, 802, 803, 804, 1201, 1202, 1203, 1204, 1401, 1402, 1403, 1404 zweimal in der zweiten Richtung geführt, wobei die durch die Leiterschleifen 18, 20, 22, 24 zu transportierenden Phasen eine Durchgangsöffnung 601, 602, 603, 604, 801, 802, 803, 804, 1201, 1202, 1203, 1204, 1401, 1402, 1403, 1404 in derselben Richtung durchströmen, in der ein Abschnitt einer Leiterschleife 18, 20, 22, 24 durch die jeweilige Durchgangsöffnung 601, 602, 603, 604, 801, 802, 803, 804, 1201, 1202, 1203, 1204, 1401, 1402, 1403, 1404 geführt ist. Somit ist jede Phase in einer ersten Ebene ihrer vorhergehenden Phase sowie in einer zweiten Ebene mit ihrer nachfolgenden Phase gekoppelt. Dadurch ergibt sich auf zwei Ebenen eine magnetische Verkopplung mit zwei Phasen.

In Figur 2 ist eine zweite Ausführungsform der Kopplungseinrichtung 30 für die zweite Ausführungsform des als Vierphasenwandler ausgebildeten Multiphasenwandler 32 schematisch dargestellt. Diese Kopplungseinrichtung 30 umfasst vier Kopplungsmodule 34, 36, 38, 40.

Dabei zeigt Figur 2a die Kopplungseinrichtung 30 von der Seite, wobei ein erstes und ein zweites Kopplungsmodul 34, 36 an einer Vorderseite der Kopplungseinrichtung 30 angeordnet und von vorne dargestellt sind. Ein drittes und viertes Kopplungsmodul 38, 40 sind in der Perspektive aus Figur 2a hinter dem ersten und zweiten Kopplungsmodul 34, 36 angeordnet.

In Figur 2b sind das erste und das zweite Kopplungsmodul 34, 36 ähnlich der Darstellung aus Figur 2a von vorne dargestellt, so dass Figur 2b die Kopplungseinrichtung 30 sowie das erste und zweite Kopplungsmodul 34, 36 von einer Vorderseite zeigt. Figur 2c zeigt das dritte und vierte Kopplungsmodul 38, 40 der Kopplungseinrichtung 30 ebenfalls von vorne. Folglich sind in Figur 2a Rückseiten des ersten und zweiten Kopplungsmoduls 34, 36 Vorderseiten des dritten und vierten Kopplungsmoduls 38, 40 zugewandt. Die in Figuren 2b und 2c dargestellten Kupplungsmodule 34, 36, 38, 40 sind aus derselben Richtung, nämlich von vorne, dargestellt.

Im Detail weist das erste Kopplungsmodul 34 eine erste Durchgangsöffnung 3401 und eine zweite Durchgangsöffnung 3402 auf, die hier über einen Schlitz 3405 miteinander verbunden sind. Eine dritte Durchgangsöffnung 3403 und eine vierte Durchgangsöffnung 3404 des ersten Kopplungsmoduls sind ebenfalls über einen Schlitz 3406 miteinander verbunden. Das zweite Kopplungsmodul 36 weist ebenfalls vier Durchgangsöffnungen 3601, 3602, 3603, 3604 auf, wobei ein erstes und ein zweites Kopplungsmodul 3601, 3602 sowie ein drittes und ein viertes Kopplungsmodul 3603, 3604 hier ebenfalls jeweils über einen Schlitz 3605, 3606 miteinander verbunden sind. Streuflüsse von Phasen, die durch Leiterschleifen 42, 44, 46, 48 strömen, die hier durch Durchgangsöffnungen 3401, 3402, 3403, 3404, 3601, 3602, 3603, 3604 zu führen sind, sind u. a. durch eine Dimensionierung der Schlitze 3405, 3406, 3605, 3606 zu beeinflussen.

Das dritte Kopplungsmodul 38 weist vier Durchgangsöffnungen 3801, 3802, 3803, 3804 auf, wobei die erste und die dritte Durchgangsöffnung 3801, 3803 sowie die zweite und die vierte Durchgangsöffnung 3802, 3804 jeweils über einen Schlitz 3805, 3806 miteinander verbunden sind. Weiterhin sind eine erste Durchgangsöffnung 4001 und eine dritte Durchgangsöffnung 4003 des vierten Kopplungsmoduls 40 über einen Schlitz 4005 miteinander verbunden. Dasselbe gilt für eine zweite und eine vierte Durchgangsöffnung 4002, 4004 des vierten Kopplungsmoduls 40, die hier ebenfalls über einen Schlitz 4006 miteinander verbunden sind. Über Abmessungen der genannten Schlitze 4005, 4006 ist für jede Leiterschleife 42, 44, 46, 48, die hier durch eine Durchgangsöffnung 3801, 3802, 3804, 4001, 4002, 4003, 4004 geführt ist, ein Streufluss einstellbar.

In der vorliegenden Ausführungsform umfasst jedes Kopplungsmodul 34, 36, 38, 40 drei Komponenten aus Kernmaterial, üblicherweise Ferritmaterial. Dabei sind zwei dieser Komponenten quaderförmig ausgebildet und weisen jeweils zwei nebeneinander angeordnete Nuten auf, wobei jede dieser Nuten außenseitig durch einen äußeren Schenkel begrenzt ist. Zwischen den beiden Nuten ist ein innerer Schenkel angeordnet, durch den die beiden Nuten voneinander getrennt sind. Dabei ist jeder der insgesamt zwei äußeren Schenkel länger als der innere Schenkel. Folglich sind diese beiden Komponenten eines Kopplungsmoduls 34, 36, 38, 40 im Profil E-förmig ausgebildet. Eine dritte Komponente eines Kopplungsmoduls 34, 36, 38, 40 ist quaderförmig ausgebildet. Zur Bereitstellung eines Kopplungsmoduls 34, 36, 38, 40, ist die dritte Komponente zwischen den beiden E-förmig ausgebildeten Komponenten anzuordnen, wobei die Nuten der beiden E-förmigen Komponenten einander zugewandt sind. Die Nuten und die zwischen den Nuten angeordnete dritte Komponente umschließen die vier Durchgangsöffnungen 3401, 3402, 3403, 3404, 3601, 3602, 3603, 3604, 3801, 3802, 3803, 3804, 4001, 4002, 4003, 4004 eines Kopplungsmoduls 34, 36, 38, 40.

Da der mittlere Schenkel einer E-förmigen Komponente kürzer als die beiden äußeren Schenkel ist, ist zwischen zwei Durchgangsöffnungen 3401, 3402, 3403,3404,3601,3602,3603,3604,3801,3802,3803,3804,4001,4002,4003, 4004 jeweils der Schlitz 3405, 3406, 3605, 3606, 3805, 3806, 4005, 4006, der die beiden Durchgangsöffnungen 3401, 3402, 3403, 3404, 3601, 3602, 3603, 3604, 3801, 3802, 3803, 3804, 4001, 4002, 4003, 4004 miteinander verbindet, angeordnet. Durch eine Breite bzw. Dicke von Schlitzen 3405, 3406, 3605, 3606, 3805, 3806, 4005, 4006 zwischen jeweils zwei Durchgangsöffnungen 3401, 3402, 3403, 3404, 3601, 3602, 3603, 3604, 3801, 3802, 3803, 3804, 4001, 4002, 4003, 4004 von bspw. 0,1 bis 0,2 mm wird ein magnetischer Widerstand eines Streuflusses der einzelnen Phasen eingestellt, wodurch eine elektromagnetische Verträglichkeit eingestellt werden kann. Die äußeren Schenkel einer Komponente sind mit der dritten, quaderförmigen Komponente durch Verklebung verbunden.

Es ist möglich, dass die Kopplungsmodule 6, 8, 12, 14 der ersten Ausführungsform der Kopplungseinrichtung 4 aus Figur 1 genauso wie die Kopplungsmodule 34, 36, 38, 40 der zweiten Ausführungsform der Kopplungseinrichtung 30 ausgebildet sind.

Außerdem zeigt Figur 2 Abschnitte von vier Leiterschleifen 42, 44, 46, 48, durch die bei einem Betrieb des Multiphasenwandlers vier Phasen mit einer vorgesehenen Spannung zu transportieren sind. Dabei ist eine erste Leiterschleife 42 für eine erste Phase, eine zweite Leiterschleife 44 für eine zweite Phase, eine dritte Leiterschleife 46 für eine dritte Phase und eine vierte Leiterschleife 48 für eine vierte Phase vorgesehen. Jede Leiterschleife 42, 44, 46, 48 umfasst zumindest einen Draht aus Metall, der von einer Isolierung aus Kunststoff und/oder aus Lack ummantelt sein kann.

Richtungen, in denen die Phasen durch Abschnitte der Leiterschleifen 42, 44, 46, 48 sowie durch die Kopplungseinrichtung 30 bei einem Betrieb der Kopplungseinrichtung 30 strömen, sind in Figur 2a durch Pfeile angedeutet. Weiterhin ist in den Figuren 2b und 2c durch eingekreiste Kreuze angedeutet, durch welche Abschnitte von Leiterschleifen 42, 44, 46, 48 die zu transportierenden Phasen in die Zeichenebene hineinströmen. Durch eingekreiste Punkte ist angedeutet, durch welche Abschnitte von Leiterschleifen 42, 44, 46, 48 die zu transportierenden Phasen aus der Zeichenebene herausströmen. Wie die Figuren 2a und 2c zeigen, ist es beim Herstellen des Multiphasenwandlers 32 vorgesehen, jede Leiterschleife 42, 44, 46, 48 durch hintereinander fluchtende Durchgangsöffnungen 601, 602, 603, 604, 801, 802, 803, 804, 1201, 1202, 1203, 1204, 1401, 1402, 1403, 1404 von zwei hintereinander angeordneten Kopplungsmodulen 34, 36, 38, 40 zu stecken.

Für eine erste Phase durch die erste Leiterschleife 42 ist folgende Führung durch die Kopplungseinrichtung 30 vorgesehen:
- durch die Vorderseite des ersten Kopplungsmoduls 34 in die zweite Durchgangsöffnung 3402 hinein und aus der Rückseite wieder heraus,
- durch die Vorderseite des vierten Kopplungsmoduls 40 in die zweite Durchgangsöffnung 4002 hinein und aus der Rückseite wieder heraus,
- durch die Rückseite des dritten Kopplungsmoduls 38 in die dritte Durchgangsöffnung 3803 hinein und aus der Vorderseite wieder heraus,
- durch die Rückseite des zweiten Kopplungsmoduls 36 in die erste Durchgangsöffnung 3601 hinein und aus der Vorderseite wieder heraus.

Die durch die zweite Leiterschleife 44 zu transportierende zweite Phase durchströmt die Kopplungseinrichtung 30 folgendermaßen:
- durch die Vorderseite des zweiten Kopplungsmoduls 36 in die dritte Durchgangsöffnung 3603 hinein und aus der Rückseite wieder heraus,
- durch die Vorderseite des dritten Kopplungsmoduls 38 in die vierte Durchgangsöffnung 3804 hinein und aus der Rückseite wieder heraus,
- durch die Rückseite des vierten Kopplungsmoduls 40 in die erste Durchgangsöffnung 4001 hinein und aus der Vorderseite wieder heraus,
- durch die Rückseite des ersten Kopplungsmoduls 34 in die vierte Durchgangsöffnung 3404 hinein und aus der Vorderseite wieder heraus.

Für die durch die dritte Leiterschleife 46 zu transportierende dritte Phase gilt folgende Führung durch die Kopplungseinrichtung 30:
- durch die Rückseite des dritten Kopplungsmoduls 38 in die zweite Durchgangsöffnung 3802 hinein und aus der Vorderseite wieder heraus,
- durch die Rückseite des ersten Kopplungsmoduls 34 in die erste Durchgangsöffnung 3401 hinein und aus der Vorderseite wieder heraus,
- durch die Vorderseite des zweiten Kopplungsmoduls 36 in die zweite Durchgangsöffnung 3602 hinein und aus der Rückseite wieder heraus,
- durch die Rückseite des vierten Kopplungsmoduls 40 in die dritte Durchgangsöffnung 4003 hinein und aus der Vorderseite wieder heraus.

Außerdem ist die vierte Phase, die durch die vierte Leiterschleife 48 zu transportieren ist, wie nachfolgend beschrieben, durch die Kopplungseinrichtung 30 geführt:
- durch die Rückseite des vierten Kopplungsmoduls 40 in die vierte Durchgangsöffnung 4004 hinein und aus der Vorderseite wieder heraus,
- durch die Rückseite des zweiten Kopplungsmoduls 36 in die vierte Durchgangsöffnung 3604 hinein und aus der Vorderseite wieder heraus,
- durch die Vorderseite des ersten Kopplungsmoduls 34 in die dritte Durchgangsöffnung 3403 hinein und aus der Rückseite wieder heraus,
- durch die Vorderseite des dritten Kopplungsmoduls 38 in die erste Durchgangsöffnung 3801 hinein und aus der Rückseite wieder heraus.

Folglich ist jede Phase sowie jede Leiterschleife 42, 44, 46, 48 durch jedes Kopplungsmodul 34, 36, 38, 40 einmal geführt. Durch jede Durchgangsöffnung 3403, 3402, 3403, 3404, 3601, 3602, 3603, 3604, 3801, 3802, 3802, 3804, 4001, 4002, 4003, 4004 sämtlicher Kopplungsmodule 34, 36, 38, 40 ist lediglich ein Abschnitt einer Leiterschleife 42, 44, 46, 48 geführt. Es ist vorgesehen, dass eine erste Ebene der Kopplungseinrichtung 30 das erste und zweite Kopplungsmodul 34, 36 umfasst, deren Durchgangsöffnungen 3403, 3402, 3403, 3404, 3601, 3602, 3603, 3604 zueinander parallel und nebeneinander angeordnet sind. Eine zweite Ebene, die hinter der ersten Ebene angeordnet ist, umfasst das dritte und vierte Kopplungsmodul 38, 40, deren Durchgangsöffnungen 3801, 3802, 3802, 3804, 4001, 4002, 4003, 4004 zueinander parallel und nebeneinander angeordnet sind. Jede Leiterschleife 42, 44, 46, 48 ist durch jede der beiden Ebenen zweimal, nämlich in einer ersten und einer zweiten Richtung, die der ersten Richtung entgegen gerichtet ist, geführt.

Bei einem Betrieb des Multiphasenwandlers 32 durchströmen die Phasen die für sie vorgesehenen Durchgangsöffnungen 3401, 3402, 3403, 3404, 3601, 3601, 3603, 3604, 3801, 3802, 3802, 3804, 4001, 4002, 4003, 4004 in jenen Richtungen, in denen die Abschnitte der Leiterschleifen 42, 44, 46, 48, wie beschrieben, durch die Durchgangsöffnungen 3401, 3402, 3403, 3404, 3601, 3601, 3603, 3604, 3801, 3802, 3802, 3804, 4001, 4002, 4003, 4004 geführt sind. Dabei ist jede Phase im Betrieb des Multiphasenwandlers 32 durch jede Ebene zweimal, nämlich in der ersten und der zweiten, entgegengesetzten Richtung geführt, wobei die strömenden Phasen miteinander gekoppelt werden.

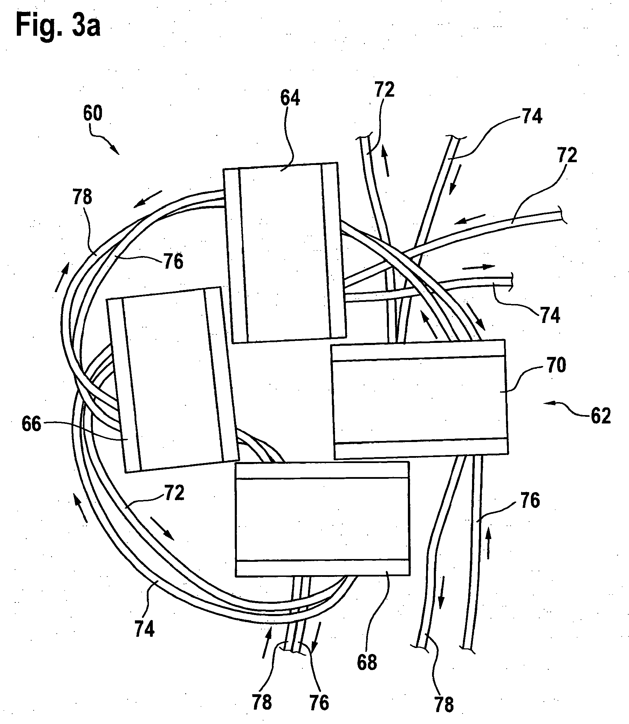

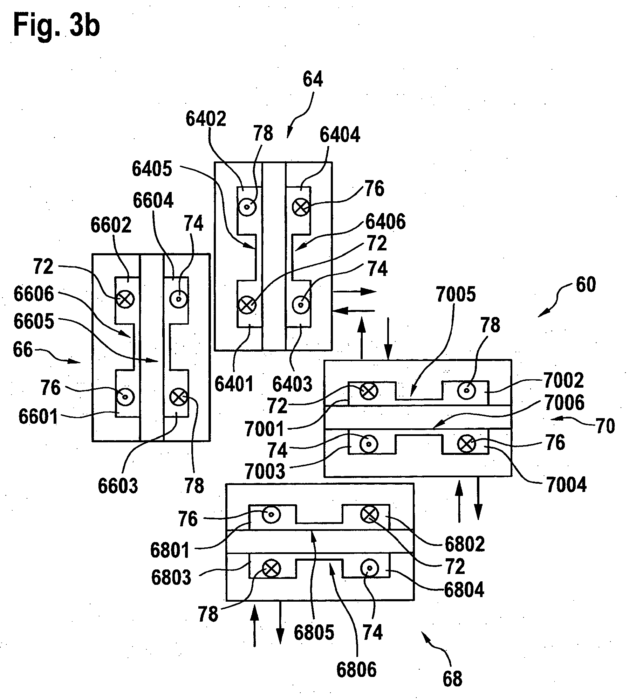

Eine dritte Ausführungsform der Kopplungseinrichtung 60 für die dritte Ausführungsform des hier als Vierphasenwandler ausgebildeten Multiphasenwandlers 62 ist in Figur 3 schematisch dargestellt, wobei die Kopplungseinrichtung 60 vier Kopplungsmodule 64, 66, 68, 70 umfasst.

Dabei zeigt Figur 3a die Kopplungseinrichtung 60 von oben. Figur 3b zeigt die vier Kopplungsmodule 64, 66, 68, 70 gemäß der in Figur 3a gezeigten räumlichen Anordnung, wobei hier jedes Kopplungsmodul 64, 66, 68, 70 von einer Vorderseite und somit von vorne gezeigt ist, wobei die jeweils vier Durchgangsöffnungen 6401, 6402, 6403, 6404, 6601, 6602, 6603, 6604, 6801, 6802, 6803, 6804, 7001, 7002, 7003, 7004 eines Kopplungsmoduls 64, 66, 68, 70 erkennbar sind. Entgegen dem Uhrzeigersinn ist in beiden Figuren 3a und 3b oben ein erstes Kopplungsmodul 64, links ein zweites Kopplungsmodul 66, unten ein drittes Kopplungsmodul 68 und rechts ein drittes Kopplungsmodul 70 angeordnet.

Die vier Kopplungsmodule 64, 66, 68, 70 sind ähnlich wie die anhand von Figur 2 bereits vorgestellten Kopplungsmodule 34, 36, 38, 40 der zweiten Ausführungsform der Kopplungseinrichtung 30 aufgebaut und somit ausgebildet. Dabei weist jedes Kopplungsmodul 64, 66, 68, 70 von vorne betrachtet oben links eine erste Durchgangsöffnung 6401, 6601, 6801, 7001, oben rechts eine zweite Durchgangsöffnung 6402, 6602, 6802, 7002, unten links eine dritte Durchgangsöffnung 6403, 6603, 6803, 7003 und unten rechts eine vierte Durchgangsöffnung 6404, 6604, 6804, 7004 auf. Dabei sind bei dem ersten Kopplungsmodul 64 die erste und die zweite Durchgangsöffnung 6401, 6402 über einen ersten Schlitz 6405 sowie die dritte und die vierte Durchgangsöffnung 6403, 6404 über einen zweiten Schlitz 6406 miteinander verbunden. Entsprechendes gilt für das zweite Kopplungsmodul 66, bei dem die erste und die zweite Durchgangsöffnung 6601, 6602 über einen ersten Schlitz 6605 sowie die dritte und die vierte Durchgangsöffnung 6603, 6604 über einen zweiten Schlitz 6606 miteinander verbunden sind. Bei dem dritten Kopplungsmodul 68 sind die erste und die zweite Durchgangsöffnung 6801, 6802 über einen ersten Schlitz 6805 miteinander verbunden. Die dritte und die vierte Durchgangsöffnung 6803, 6804 sind hier über einen zweiten Schlitz 6806 miteinander verbunden. Bei dem vierten Kopplungsmodul 70 sind ein erster Schlitz 7005 zum Verbinden der ersten und der zweiten Durchgangsöffnung 7001, 7002 sowie ein zweiter Schlitz 7006 zum Verbinden der dritten und der vierten Durchgangsöffnung 7003, 7004 vorgesehen.

Außerdem zeigt Figur 3 Abschnitte von vier Leiterschleifen 72, 74, 76, 78, durch die bei einem Betrieb des Multiphasenwandlers vier Phasen mit einer hierfür eingestellten Spannung zu transportieren sind. Dabei ist eine erste Leiterschleife 72 für eine erste Phase, eine zweite Leiterschleife 74 für eine zweite Phase, eine dritte Leiterschleife 76 für eine dritte Phase und eine vierte Leiterschleife 78 für eine vierte Phase vorgesehen. Die Leiterschleifen 72, 74, 76, 78 umfassen jeweils mindestens einen Draht aus Metall, der mit Kunststoff oder Lack ummantelt sein kann.

Richtungen, in denen Abschnitte der Leiterschleifen 72, 74, 76, 78 durch die Kopplungseinrichtung 60 geführt und die Phasen zu transportieren sind und in denen die Phasen diese Leiterschleifen 72, 74, 76, 78 durchströmen, sind in Figur 3a durch Pfeile angedeutet. Weiterhin ist in Figuren 3b durch eingekreiste Kreuze angedeutet, durch welche Abschnitte von Leiterschleifen 72, 74, 76, 78 die zu transportierenden Phasen in die Zeichenebene hineinströmen. Durch eingekreiste Punkte ist angedeutet, wenn zu transportierende Phasen durch den jeweiligen Abschnitt der Leiterschleife 72, 74, 76, 78 aus der Zeichenebene herausströmen.

Für die erste Phase, die durch die erste Leiterschleife 72 zu transportieren ist, ist folgende Führung durch die Kopplungseinrichtung 60 vorgesehen:
- durch die Vorderseite des ersten Kopplungsmoduls 64 in die erste Durchgangsöffnung 6401 hinein und aus der Rückseite wieder heraus,
- durch die Vorderseite des zweiten Kopplungsmoduls 66 in die zweite Durchgangsöffnung 6602 hinein und aus der Rückseite wieder heraus,
- durch die Vorderseite des dritten Kopplungsmoduls 68 in die zweite Durchgangsöffnung 6802 hinein und aus der Rückseite wieder heraus,
- durch die Vorderseite des vierten Kopplungsmoduls 70 in die erste Durchgangsöffnung 7001 hinein und aus der Rückseite wieder heraus.

Die durch die zweite Leiterschleife 74 zu transportierende zweite Phase ist folgendermaßen durch die Kopplungseinrichtung 60 geführt:
- durch die Rückseite des vierten Kopplungsmoduls 70 in die dritte Durchgangsöffnung 7003 hinein und aus der Vorderseite wieder heraus,
- durch die Rückseite des dritten Kopplungsmoduls 68 in die vierte Durchgangsöffnung 6804 hinein und aus der Vorderseite wieder heraus,
- durch die Rückseite des zweiten Kopplungsmoduls 66 in die vierte Durchgangsöffnung 6604 hinein und aus der Vorderseite wieder heraus,
- durch die Rückseite des ersten Kopplungsmoduls 64 in die dritte Durchgangsöffnung 6403 hinein und aus der Vorderseite wieder heraus.

Für die durch die dritte Leiterschleife 76 zu transportierende dritte Phase gilt folgende Führung durch die Kopplungseinrichtung 60:
- durch die Vorderseite des vierten Kopplungsmoduls 70 in die vierte Durchgangsöffnung 7004 hinein und aus der Rückseite wieder heraus,
- durch die Vorderseite des ersten Kopplungsmoduls 64 in die vierte Durchgangsöffnung 6404 hinein und aus der Rückseite wieder heraus,
- durch die Rückseite des zweiten Kopplungsmoduls 66 in die erste Durchgangsöffnung 6601 hinein und aus der Vorderseite wieder heraus,
- durch die Rückseite des dritten Kopplungsmoduls 68 in die erste Durchgangsöffnung 6801 hinein und aus der Vorderseite wieder heraus.

Außerdem ist die durch die vierte Leiterschleife 78 zu transportierende vierte Phase, wie nachfolgend beschrieben, durch die Kopplungseinrichtung 60 geführt:
- durch die Vorderseite des dritten Kopplungsmoduls 68 in die dritte Durchgangsöffnung 6803 hinein und aus der Rückseite wieder heraus,
- durch die Vorderseite des zweiten Kopplungsmoduls 66 in die dritte Durchgangsöffnung 6603 hinein und aus der Vorderseite wieder heraus,
- durch die Rückseite des ersten Kopplungsmoduls 64 in die zweite Durchgangsöffnung 6402 hinein und aus der Rückseite wieder heraus,
- durch die Rückseite des vierten Kopplungsmoduls 70 in die zweite Durchgangsöffnung 7002 hinein und aus der Vorderseite wieder heraus.

Folglich ist jede Leiterschleife 72, 74, 76, 78 durch jedes Kopplungsmodul 64, 66, 68, 70 einmal geführt. Wobei auch Ausführungsformen möglich sind, in denen jede Leiterschleife 72, 74, 76, 78 zwei- oder mehrfach durch jedes Kopplungsmodul 64, 66, 68, 70 geführt sein kann. Durch jede Durchgangsöffnung 6401, 6402, 6403, 6404, 6601, 6602, 6603, 6604, 6801, 6802, 6803, 6804, 7001, 7002, 7003, 7004 sämtlicher Kopplungsmodule 64, 66, 68, 70 ist lediglich ein Abschnitt einer Leiterschleife 72, 74, 76, 78 geführt. In dieser Ausführungsform umfasst die Kopplungseinrichtung vier Ebenen, wobei jede Ebene durch ein Kopplungsmodul 64, 66, 68, 70 gebildet ist. Bei einem Betrieb des Multiphasenwandlers 62, strömen zwei der Phasen in der ersten Richtung und die beiden anderen Phasen in der zweiten Richtung durch ein Kopplungsmodul 64, 66, 68, 70 und somit durch eine Ebene, wodurch die Phasen miteinander gekoppelt werden.

Ein Streufluss entlang eines Streupfads, der eine Durchgangsöffnung 6401, 6402, 6403, 6404, 6601, 6602, 6603, 6604, 6801, 6802, 6803, 6804, 7001, 7002, 7003, 7004 und eine durch die Durchgangsöffnung 6401, 6402, 6403, 6404, 6601, 6602, 6603, 6604, 6801, 6802, 6803, 6804, 7001, 7002, 7003, 7004 geführte Leiterschleife 72, 74, 76, 78 umschließt, wird durch eine Breite bzw. Dicke sowie eine Querschnittsfläche eines Schlitzes 6405, 6406, 6605, 6606, 6805, 6806, 7005, 7006 sowie einem darin angeordneten, niederpermeablen Material bestimmt. So ist es möglich, einen Schlitz 6405, 6406, 6605, 6606, 6805, 6806, 7005, 7006 als Luftspalt ohne isolierendes Material oder als Klebespalt auszubilden, wobei im letzteren Fall isolierendes Material in den Schlitz 6405, 6406, 6605, 6606, 6805, 6806, 7005, 7006 einzukleben ist.

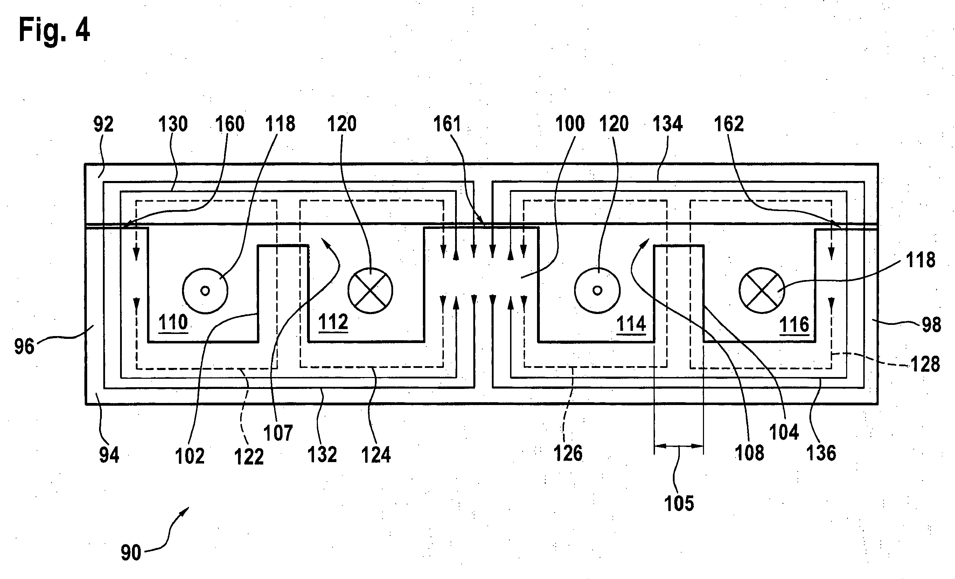

Figur 4 zeigt ein Beispiel für ein Kopplungsmodul 90, das als Komponente einer vierten Ausführungsform als ein Teil einer Kopplungseinrichtung einer vierten Ausführungsform eines Multiphasenwandlers ausgebildet ist. Dieses Kopplungsmodul 90 umfasst eine erste quaderförmige Komponente 92 sowie eine zweite, mit insgesamt vier Nuten versehene Komponente 94, wobei beide Komponenten 92, 94 aus Kernmaterial, üblicherweise Ferritmaterial, gebildet sind. Insgesamt weist die zweite Komponente 94 zwei äußere lange Schenkel 96, 98 sowie einen in der Mitte angeordneten mittigen langen Schenkel 100 auf. Dabei weisen die beiden äußeren langen Schenkel 96, 98 sowie der mittige lange Schenkel 100 idealerweise aber nicht zwingend dieselbe Länge auf. Es ist üblich, den mittigen Schenkel 100 bspw. durch Herunterschleifen etwas kürzer als die äußeren Schenkel 96, 98 auszuführen und dafür auf das Einbringen von Klebstoff oder Folien zu verzichten. Die Ausführungsform mit dem eingefüllten Klebstoff bietet jedoch eine deutlich bessere Leistung, da der Aufbau nur symmetrisch ist, wenn in allen drei Schenkeln 96, 98, 100 der gleiche Luftspalt vorhanden ist. Der mittige lange Schenkel 100 ist außerdem breiter als jeweils einer der beiden äußeren langen Schenkel 96, 98, bspw. so breit bzw. mit derselben Querschnittsfläche wie beide äußeren langen Schenkel 96, 98 zusammen. Außerdem umfasst die zweite Komponente 94 zwei kurze Schenkel 102, 104, wobei ein erster derartiger kurzer Schenkel 102 zwischen einem ersten äußeren langen Schenkel 96 und dem mittigen langen Schenkel 100 angeordnet ist. Ein zweiter kurzer Schenkel 104 ist zwischen einem zweiten äußeren langen Schenkel 98 sowie dem mittigen langen Schenkel 100 angeordnet.

Jeweils eine von vier Nuten der zweiten Komponente 94 ist jeweils von einem langen Schenkel 96, 98, 100 sowie von einem kurzen Schenkel 102, 104 begrenzt. Ferner ist jeder der drei langen Schenkel 96, 98, 100 jeweils länger als jeweils einer der beiden kurzen Schenkel 102, 104. Zum Bereitstellen des Kopplungsmoduls 90 ist die erste Komponente 92 auf Enden der drei langen Schenkel 96, 98, 100 der zweiten Komponente 94 anzuordnen. Dabei ist vorgesehen, zwischen Enden der langen Schenkel 96, 98, 100 und Bereichen der ersten Komponente 92, an der die Enden der langen Schenkel 96, 98, 100 in Anlage kommen, eine Folie und/oder einen Kleber anzuordnen, wodurch zwischen den Enden der langen Schenkel 96, 98, 100 und der ersten Komponente 92 als Klebespalte ausgebildete Schlitze 160, 161, 162 bereitzustellen sind. Da jeder der beiden kurzen Schenkel 102, 104 kürzer als jeweils einer der drei langen Schenkel 96, 98, 100 ist, wird zwischen einem Ende jeweils eines kurzen Schenkels 102, 104 ein als Luftspalt ausgebildeter Schlitz 107 bereitgestellt. Außerdem weist jeder kurze Schenkel 102, 104 eine Querschnittsfläche auf, deren Länge 105 hier durch einen Doppelpfeil angedeutet ist.

Durch Aneinanderfügen der beiden Komponenten 92, 94 sind zudem vier Durchgangsöffnungen 110, 112, 114, 116 des Kopplungsmoduls 90 bereitzustellen. Dabei sind die langen Schenkel 96, 98, 100 der zweiten Komponente 94 mit der ersten Komponente 92 durch Verkleben oder Verklemmen miteinander zu verbinden, wobei zwischen Enden der langen Schenkel 96, 98, 100 und der ersten Komponente 92 niederpermeables Material einzufügen, d. h. bspw. Klebematerial anzuordnen und/oder eine Folie einzukleben ist. Durch ein derartiges Verkleben oder Verklemmen sind die beiden Komponenten 92, 94 miteinander zu verbinden sowie zwischen den Enden der langen Schenkel 96, 98, 100 Schlitze 160, 161, 162, die hier als Klebespalte ausgebildet sind, bereitzustellen.

Dabei ist eine erste Durchgangsöffnung 110 durch den ersten äußeren langen Schenkel 96, den ersten kurzen Schenkel 102 sowie durch die erste Komponente 92 begrenzt. Eine zweite Durchgangsöffnung 112 ist durch den ersten kurzen Schenkel 102, den mittigen langen Schenkel 110 sowie die zweite Komponente 92 begrenzt. Eine dritte Durchgangsöffnung 114 ist durch den mittigen langen Schenkel 100 und einen zweiten kurzen Schenkel 104 begrenzt. Eine vierte Durchgangsöffnung 116 ist durch den zweiten kurzen Schenkel 104, den zweiten äußeren langen Schenkel 98 und die zweite Komponente 92 begrenzt. Dabei sind die erste und die zweite Durchgangsöffnung 110, 112 durch den ersten als Luftspalt ausgebildeten Schlitz 107 und die dritte und die vierte Durchgangsöffnung 114, 116 durch den zweiten als Luftspalt ausgebildeten Schlitz 108 miteinander verbunden. Bei der hier vorgestellten Ausführungsform eines Teils des Kopplungsmoduls 90 für einen Multiphasenwandler ist vorgesehen, dass eine durch eine erste Leiterschleife 118 zu transportierende erste Phase aus der ersten Durchgangsöffnung 110 herausgeführt und in die vierte Durchgangsöffnung 116 hineingeführt ist. Durch die zweite Durchgangsöffnung 112 ist eine durch die zweite Leiterschleife 120 zu transportierende hineingeführt, wohingegen diese zweite Phase durch die zweite Leiterschleife 120 aus der dritten Durchgangsöffnung 114 wieder herausgeführt ist.

Außerdem ist für jeden der hier gezeigten Abschnitte der beiden Leiterschleifen 118, 120 ein geschlossener Streupfad 122, 124, 126, 128 dargestellt, wobei jeder Streupfad 122, 124, 126, 128 eine Durchgangsöffnung 110, 112, 114, 116 mit einem darin angeordneten Abschnitt einer Leiterschleife 118, 120 umschließt. Dabei durchläuft ein erster Streupfad 122, der die erste Durchgangsöffnung 110 umschließt, einen Abschnitt der ersten Komponente 92, den als Luftspalt und/oder Klebespalt ausgebildeten Schlitz 160 den ersten äußeren langen Schenkel 96, einen Teil der Komponente 94 den ersten kurzen Schenkel 102 sowie den ersten Schlitz 107. Ein zweiter Streupfad 124 umschließt die zweite Durchgangsöffnung 112 und durchläuft dabei einen Abschnitt der ersten Komponente 92, den als Luftspalt und/oder Klebespalt ausgebildeten Schlitz 161, den mittigen langen Schenkel 100, einen Teil der Komponente 94, den ersten kurzen Schenkel 102 sowie den ersten Schlitz 107. Der dritte Streupfad 126 umschließt die dritte Durchgangsöffnung 114 und durchläuft dabei einen Abschnitt der ersten Komponente 92, den als Luftspalt und/oder Klebespalt ausgebildeten Schlitz 160, den mittigen langen Schenkel 100, einen Teil der Komponente 94, den zweiten kurzen Schenkel 104 sowie den zweiten Schlitz 108. Die vierte Durchgangsöffnung 116 ist von einem vierten Streupfad 128 umschlossen, der einen Abschnitt der ersten Komponente 92, den als Luftspalt und/oder Klebespalt ausgebildeten Schlitz 162, den zweiten äußeren langen Schenkel 98, einen Teil der Komponente 94, den zweiten kurzen Schenkel 104 sowie den zweiten Schlitz 108 durchquert.

Weiterhin sind in Figur 4 geschlossene Hauptpfade 130, 132, 134, 136 angedeutet, wobei ein erster und ein zweiter Hauptpfad 130, 132 die beiden ersten Durchgangsöffnungen 110, 112 umschließen. Ein dritter und ein vierter Hauptpfad 134, 136 umschließen jeweils die dritte und vierte Durchgangsöffnung 114, 116. Der erste und der zweite, sowie der dritte und der vierte Hauptpfad sind im Bezug auf Ihren Verlauf identisch, sie werden jedoch mit magnetischen Flüssen gegensätzlicher Richtung durchströmt. Durch die gegensätzliche Richtung kommt es zu einer Teilkompensation der magnetischen Flüsse, die durch den elektrischen Stromfluss in den beiden Leiterschleifen 118 und 120 erzeugt werden. Dabei ist der magnetische Fluss, der durch den Stromfluss in Leiterschleife 118 erzeugt wird, durch den Verlauf vom magnetischen Hauptpfad 130 und 136 angedeutet. Der magnetische Fluss, der durch den Stromfluss in Leiterschleife 120 erzeugt wird, ist durch den magnetischen Hauptpfad 132 und 134 angedeutet.

Dabei durchläuft der erste Hauptpfad 130 einen Abschnitt der ersten Komponente 92, den ersten als Luftspalt und/oder Klebespalt ausgebildeten Schlitz 160, den ersten äußeren langen Schenkel 96, einen Abschnitt der zweiten Komponente 94, den mittleren langen Schenkel 100 sowie den zweiten mittleren, als Luftspalt und/oder Klebespalt ausgebildeten Schlitz 161. Der zweite Hauptpfad 132 durchquert einen Abschnitt der ersten Komponente 92, den mittigen langen Schenkel 100, einen Abschnitt 94 der zweiten Komponente, den ersten äußeren langen Schenkel 96 sowie den ersten, als Luftspalt und/oder Klebespalt ausgebildeten Schlitz 160. Bei einem dritten Hauptpfad 134 ist vorgesehen, dass dieser durch einen Abschnitt der ersten Komponente 92, den mittleren, als Klebespalt ausgebildeten Schlitz 161, den mittigen langen Schenkel 100, einen Abschnitt der ersten Komponente 94, durch den zweiten äußeren langen Schenkel 98 und den dritten als Klebespalt ausgebildeten Schlitz 162 durchläuft. Der vierte Hauptpfad 136 durchläuft einen Abschnitt der ersten Komponente 92, den dritten als Luftspalt ausgebildeten Schlitz 162, den zweiten äußeren langen Schenkel 98, einen Abschnitt der ersten Komponente 94, den mittigen langen Schenkel 100 sowie den zweiten, als Luftspalt ausgebildeten Schlitz 161.

Durch eine Breite der als Luftspalte und/oder Klebespalte ausgebildeten Schlitze 160, 161, 162, die durch eine Dicke des Materials, d. h. der Folie und/oder des Klebers, zwischen den Enden der langen Schenkel 96, 98, 100 und der ersten Komponente 92 festgelegt ist, wird ein magnetischer Widerstand eines magnetischen Hauptflusses entlang eines jeweiligen Hauptpfads 130, 132, 134, 136 eingestellt.

Weiterhin wird durch eine Breite jeweils eines als Luftspalt ausgebildeten Schlitzes 107, 108, die jeweils durch eine Differenz der Länge eines langen Schenkels 96, 98, 100 und einem kurzen Schenkel 102, 104 definiert ist, sowie durch eine Querschnittsfläche eines kurzen Schenkels 102, 104 ein magnetischer Widerstand eines Streuflusses entlang eines Streupfads 122, 124, 126, 128 definiert. Durch eine reduzierte Querschnittsfläche eines kurzen Schenkels 102, 104 wird weiterhin auch eine Querschnittsfläche eines Streupfads 122, 124, 126, 128 eingestellt. Dabei ist es möglich, durch gezieltes Sättigen eines Streupfads 122, 124, 126, 128 einen Hauptpfad 130, 132, 134, 136, der jeweils zwei Streupfade 122, 124, 126, 128 umschließt, vor Sättigung zu schützen.

In Variationen des Kopplungsmoduls 90 ist es auch möglich, für das Kopplungsmodul 90 statt einer flachen Komponente 92 und einer mit Nuten ausgeführten Komponente 94 zwei mit Nuten ausgeführte Komponenten 94 zu verwenden. Des weiteren ist es möglich, eine Führung der beiden Leiterschleifen 118,120 zwischen den beiden Durchgangsöffnungen 114,116 zu tauschen.

Jede der vorgestellten Ausführungsformen der Kopplungseinrichtung 4, 30, 60 ist für vier Phasen eines Multiphasenwandlers 2, 32, 64 ausgelegt und umfasst vier Kopplungsmodule 6, 8, 12, 14, 34, 36, 38, 40, 64, 66, 68, 70, 90. Dabei umschließt jedes Kopplungsmodul 6, 8, 12, 14, 34, 36, 38, 40, 64, 66, 68, 70, 90 vier zueinander parallel angeordnete Durchgangsöffnungen 110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004, wobei durch eine Durchgangsöffnung 110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004 eines Kopplungsmoduls 6, 8, 12, 14, 34, 36, 38, 40, 64, 66, 68, 70, 90 mindestens ein Abschnitt einer Leiterschleife 18, 20, 22, 24, 42, 44, 46, 48, 72, 74, 76, 78, 118, 120 für eine Phase geführt ist. Durch alle vier Durchgangsöffnungen 110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004 eines Kopplungsmoduls 6, 8, 12, 14, 34, 36, 38, 40, 64, 66, 68, 70, 90 sind Abschnitte von Leiterschleifen 18, 20, 22, 24, 42, 44, 46, 48, 72, 74, 76, 78, 118, 120 für mindestens zwei Phasen geführt.

Weiterhin ist vorgesehen, dass mindestens ein Kopplungsmodul 6, 8, 12, 14, 34, 36, 38, 40, 64, 66, 68, 70, 90 eine Ebene der Kopplungseinrichtung 4, 30, 60 bildet, wobei durch jede Ebene mindestens vier Durchgangsöffnungen 110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004 geführt sind, wobei durch Durchgangsöffnungen 110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004 jeder Ebene mindestens ein Abschnitt einer Leiterschleife 18, 20, 22, 24, 42, 44, 46, 48, 72, 74, 76, 78, 118, 120 für jede der vier Phasen geführt ist.

Bei der ersten und der zweiten Ausführungsform umfasst eine Ebene jeweils zwei Kopplungsmodule 6, 8, 12, 14, 34, 36, 38, 40 mit acht Durchgangsöffnungen 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004. Bei der dritten Ausführungsform der Kopplungseinrichtung 62 umfasst eine Ebene lediglich ein Kopplungsmodul 64, 66, 68, 70 mit vier Durchgangsöffnungen 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004. Mehrere, in der Regel zwei Kopplungsmodule 90, wie anhand von Figur 4 vorgestellt, können eine Ebene der vierten Ausführungsform der Kopplungseinrichtung bilden.

Üblicherweise ist die Hälfte der Phasen, die durch Abschnitte von Leiterschleifen 18, 20, 22, 24, 42, 44, 46, 48, 72, 74, 76, 78, 118, 120 zu transportieren und durch eine Ebene geführt sind, in einer ersten Richtung und die andere Hälfte der Phasen in einer zweiten Richtung geführt, wobei die erste Richtung und die zweite Richtung zueinander entgegengesetzt orientiert sind. Bei einem Betrieb der Kopplungseinrichtung 4, 30, 60 ist eine Phase durch einen Abschnitt einer Leiterschleife 18, 20, 22, 24, 42, 44, 46, 48, 72, 74, 76, 78 in derselben Richtung oder in der entgegengesetzten Richtung zu transportieren, in der der jeweilige Abschnitt der Leiterschleife 18, 20, 22, 24, 42, 44, 46, 48, 72, 74, 76, 78 durch diese Ebene geführt ist. Bei der ersten Ausführungsform ist jede Phase zweimal durch zwei Durchgangsöffnungen 601, 602, 603, 604, 801, 802, 803, 804, 1201, 1202, 1203, 1204, 1401, 1402, 1403, 1404 eines Kopplungsmoduls 6, 8, 12, 14 sowie einer Ebene geführt, nämlich zweimal durch eine Durchgangsöffnung 601, 602, 603, 604, 801, 802, 803, 804, 1201, 1202, 1203, 1204, 1401, 1402, 1403, 1404 in der ersten Richtung sowie zweimal durch eine weitere Durchgangsöffnung 601, 602, 603, 604, 801, 802, 803, 804, 1201, 1202, 1203, 1204, 1401, 1402, 1403, 1404 in der anderen Richtung.

Bei der zweiten Ausführungsform ist jede durch eine Leiterschleife 42, 44, 46, 48 zu transportierende Phase lediglich einmal durch ein Kopplungsmodul 34, 36, 38, 40 jedoch zweimal in entgegengesetzten Richtungen durch eine aus zwei Kopplungsmodulen 34, 36, 38, 40 gebildete Ebene geführt. In der zweiten Ausführungsform ist auch möglich, jede Leiterschleife 42, 44, 46, 48 zweimal durch ein Kopplungsmodul 34, 36, 38, 40 zu führen. Bei dieser Realsierung ist denkbar, dass ein Verbindungsabschnitt einer Leiterschleife 42, 44, 46, 48 oder einer entsprechende Wicklungen U-förmig ausgebildet ist. Weiterhin sind ein erster Abschnitt der Leiterschleife 42, 44, 46, 48 in eine erste Durchgangsöffnung 3401, 3402, 3403, 3404, 3601, 3601, 3603, 3604, 3801, 3802, 3802, 3804, 4001, 4002, 4003, 4004 des Kopplungsmoduls 34, 36, 38, 40 und ein zweiter Abschnitt der Leiterschleife 42, 44, 46, 48 von derselben Seite in eine zweite Durchgangsöffnung 3401, 3402, 3403, 3404, 3601, 3601, 3603, 3604, 3801, 3802, 3802, 3804, 4001, 4002, 4003, 4004 desselben Kopplungsmoduls 34, 36, 38, 40 zu stecken. Eine Verbindung zwischen den beiden Abschnitten der Leiterschleife 42, 44, 46, 48 ist über Schweissverbindungen an offenen Enden des U-förmigen Verbindungsabschnitts der Leiterschleife 42, 44, 46, 48 realisierbar, mit dem ein Ende des ersten Abschnitts der Leiterschleife 42, 44, 46, 48 mit einem Ende des zweiten Abschnitts der Leiterschleife 42, 44, 46, 48 zu verbinden ist.

In der dritten Ausführungsform ist jede Leiterschleife 72, 74, 76, 78 jeweils einmal durch ein Kopplungsmodul 64, 66, 68, 70 und somit durch eine Ebene geführt.

Zumindest bei der ersten, dritten und vierten Ausführungsform sind Aufbauten mit ein-, zwei-, oder mehrfachen Durchführungen einer Leiterschleife 18, 20, 22, 24, 72, 74, 76, 78, 118, 120 durch ein Kopplungsmodul 18, 20, 22, 24, 72, 74, 76, 78, 90 denkbar. Wobei die Anzahl der Durchführungen üblicherweise im kleinen einstelligen Bereich liegt. Bei dem Kopplungsmodul 90 aus Figur 4, das für die vierte Ausführungsform der Kopplungseinrichtung ausgebildet ist, ist jede Leiterschleife 118, 120 durch zwei Durchgangsöffnungen 110, 112, 114, 116 geführt, wobei jeweils eine Leiterschleife 118, 120 in einer ersten Richtung durch eine erste und in einer zweiten, entgegengesetzten Richtung durch eine weitere, zweite Durchgangsöffnung 110, 112, 114, 116 geführt ist.

Bei der ersten Ausführungsform der Kopplungseinrichtung 4 sind durch die Durchgangsöffnungen 601, 602, 603, 604, 801, 802, 803, 804, 1201, 1202, 1203, 1204, 1401, 1402, 1403, 1404 von jedem Kopplungsmodul 6, 8, 12, 14 Abschnitte von Leiterschleifen 18, 20, 22, 24, 42, 44, 46, 48, 72, 74, 76, 78 für zwei Phasen geführt, wobei durch jede Durchgangsöffnung 601, 602, 603, 604, 801, 802, 803, 804, 1201, 1202, 1203, 1204, 1401, 1402, 1403, 1404 zwei Abschnitte einer Leiterschleife 18, 20, 22, 24 einer Phase in derselben Richtung geführt sind.

Bei der zweiten und dritten Ausführungsform der Kopplungseinrichtung 30, 60 sind durch die Durchgangsöffnungen 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004 von jedem Kopplungsmodul 34, 36, 38, 40, 64, 66, 68, 70 Abschnitte von Leiterschleifen 18, 20, 22, 24, 42, 44, 46, 48, 72, 74, 76, 78 für vier Phasen geführt, wobei durch jede Durchgangsöffnung 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004 ein Abschnitt einer Leiterschleife 42, 44, 46, 48, 72, 74, 76, 78 einer Phase geführt ist.

Für die Kopplungseinrichtungen 4, 30 nach der ersten und zweiten Ausführungsform, die jeweils zwei Paare Kopplungsmodule 6, 8, 12, 14, 34, 36, 38, 40 aufweisen, die eine Ebene bilden, sind die Kopplungsmodule 6, 8, 12, 14, 34, 36, 38, 40 jeweils eines Paares von Kopplungsmodulen 6, 8, 12, 14, 34, 36, 38, 40 senkrecht zu den Durchgangsöffnungen 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004 orientiert parallel nebeneinander angeordnet. Die beiden Paare sind hintereinander und die Durchgangsöffnungen 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004 beider Paare in derselben Richtung orientiert, wobei die beiden Paare zueinander um 90° gedreht sind.

Ein Kopplungsmodul 6, 8, 12, 14, 34, 36, 38, 40, 64, 66, 68, 70, 90 kann zumindest zwei Komponenten 92, 94 aus Ferritmaterial und zwei Paare Durchgangsöffnungen 110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004 aufweisen, wobei zwei üblicherweise benachbarte Durchgangsöffnungen 110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004 über einen Schlitz 107, 108, 160, 161, 162, 605, 805, 1205, 1405, 3405, 3406, 3605, 3606, 3805, 3806, 4005, 4006, 6405, 6406, 6605, 6606, 6805, 6806, 7005, 7006, der als Luftspalt oder Klebespalt ausgebildet sein kann, miteinander verbunden sind.

Ein Kopplungsmodul 6, 8, 12, 14, 34, 36, 38, 40, 64, 66, 68, 70, 90 kann im Querschnitt quaderförmig sein und dabei ggf. abgerundete Ecken aufweisen. Es ist jedoch auch möglich, dass ein Kopplungsmodul 6, 8, 12, 14, 34, 36, 38, 40, 64, 66, 68, 70, 90 halbkreisförmig ausgebildet ist.

Der beschriebene Multiphasenwandler 2, 32, 64 weist mindestens eine beschriebene Kopplungseinrichtung 4, 30, 60 auf und kann für den Fall, dass der Multiphasenwandler 2, 32, 64 genau eine derartige Kopplungseinrichtung 4, 30, 60 aufweist, als Vierphasenwandler ausgebildet sein.

## Patentansprüche

1. Kopplungseinrichtung für vier Phasen eines Multiphasenwandlers (2, 32, 62), die mehrere Kopplungsmodule (6, 8, 12, 14, 34, 36, 38, 40, 64, 66, 68, 70, 90) aufweist, wobei jedes Kopplungsmodul (6, 8, 12, 14, 34, 36, 38, 40, 64, 66, 68, 70, 90) vier zueinander parallel angeordnete Durchgangsöffnungen (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) umschließt, **dadurch gekennzeichnet, dass** vier Kopplungsmodule (6, 8, 12, 14, 34, 36, 38, 40, 64, 66, 68, 70, 90) vorgesehen sind, wobei durch eine Durchgangsöffnung (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) eines Kopplungsmoduls (6, 8, 12, 14, 34, 36, 38, 40, 64, 66, 68, 70, 90) mindestens ein Abschnitt einer Leiterschleife (18, 20, 22, 24, 42, 44, 46, 48, 72, 74, 76, 78, 118, 120) für eine Phase geführt ist, wobei durch alle vier Durchgangsöffnungen (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) eines Kopplungsmoduls (6, 8, 12, 14, 34, 36, 38, 40, 64, 66, 68, 70, 90) Abschnitte von Leiterschleifen (18, 20, 22, 24, 42, 44, 46, 48, 72, 74, 76, 78, 118, 120) für mindestens zwei Phasen geführt sind.

2. Kopplungseinrichtung nach Anspruch 1, bei der mindestens ein Kopplungsmodul (6, 8, 12, 14, 34, 36, 38, 40, 64, 66, 68, 70, 90) eine Ebene der Kopplungseinrichtung (4, 30, 60) bildet, wobei durch jede Ebene mindestens vier Durchgangsöffnungen (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) geführt sind, wobei durch Durchgangsöffnungen (601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) jeder Ebene mindestens ein Abschnitt einer Leiterschleife (18, 20, 22, 24, 42, 44, 46, 48, 72, 74, 76, 78, 118, 120) für jede der vier Phasen geführt ist.

3. Kopplungseinrichtung nach Anspruch 2, bei der Abschnitte von Leiterschleifen (18, 20, 22, 24, 42, 44, 46, 48, 72, 74, 76, 78, 118, 120) durch eine Ebene geführt sind, wobei bei Betrieb der Kopplungseinrichtung (4, 30, 60, 90) die Hälfte der Phasen in einer ersten Richtung und die andere Hälfte in einer zweiten Richtung durch die Ebene strömt, wobei die erste Richtung und die zweite Richtung zueinander entgegengesetzt orientiert sind.

4. Kopplungseinrichtung nach einem der voranstehenden Ansprüche, bei der durch die Durchgangsöffnungen (601, 602, 603, 604, 801, 802, 803, 804, 1201, 1202, 1203, 1204, 1401, 1402, 1403, 1404) von jedem Kopplungsmodul (6, 8, 12, 14) Abschnitte von Leiterschleifen (18, 20, 22, 24) für zwei Phasen geführt sind, wobei durch jede Durchgangsöffnung (601, 602, 603, 604, 801, 802, 803, 804, 1201, 1202, 1203, 1204, 1401, 1402, 1403, 1404) mindestens zwei Abschnitte einer Leiterschleife (18, 20, 22, 24) einer Phase geführt sind.

5. Kopplungseinrichtung nach einem der Ansprüche 1 bis 3, bei der durch die Durchgangsöffnungen (3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) von jedem Kopplungsmodul (34, 36, 38, 40, 64, 66, 68, 70) Abschnitte von Leiterschleifen (42, 44, 46, 48, 72, 74, 76, 78) für vier Phasen geführt sind, wobei durch jede Durchgangsöffnung (3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) mindestens ein Abschnitt einer Leiterschleife (42, 44, 46, 48, 72, 74, 76, 78) einer Phase geführt ist.

6. Kopplungseinrichtung nach einem der voranstehenden Ansprüche, bei dem zwei benachbart angeordnete Durchgangsöffnungen (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) eines Kopplungsmoduls (6, 8, 12, 14, 34, 36, 38, 40, 64, 66, 68, 70, 90) über einen Schlitz (107, 108, 160, 161, 162, 605, 805, 1205, 1405, 3405, 3406, 3605, 3606, 3805, 3806, 4005, 4006, 6405, 6406, 6605, 6606, 6805, 6806, 7005, 7006) miteinander verbunden sind.

7. Kopplungseinrichtung nach einem der voranstehenden Ansprüche, der zwei Paare Kopplungsmodule (6, 8, 12, 14, 34, 36, 38, 40, 90) aufweist, bei dem Kopplungsmodule (6, 8, 12, 14, 34, 36, 38, 40, 90) jeweils eines Paares von Kopplungsmodulen (6, 8, 12, 14, 34, 36, 38, 40, 90) senkrecht zu den Durchgangsöffnungen (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004) orientiert parallel nebeneinander angeordnet sind, wobei die beiden Paare hintereinander und die Durchgangsöffnungen (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004) beider Paare in derselben Richtung orientiert sind, und wobei die beiden Paare zueinander um 90° gedreht sind.

8. Kopplungseinrichtung nach einem der voranstehenden Ansprüche, bei dem jedes Kopplungsmodul (6, 8, 12, 14, 34, 36, 38, 40, 64, 66, 68, 70, 90) Ferritmaterial aufweist.

9. Kopplungseinrichtung nach einem der voranstehenden Ansprüche, bei der jedes Kopplungsmodul (6, 8, 12, 14, 34, 36, 38, 40, 64, 66, 68, 70, 90) quaderförmig ausgebildet ist.

10. Multiphasenwandler, der mindestens eine Kopplungseinrichtung (4, 30, 60, 90) nach einem der voranstehenden Ansprüche aufweist.

11. Multiphasenwandler nach Anspruch 10, der als Vierphasenwandler ausgebildet ist.

## Claims

1. Coupling device for four phases of a multiphase converter (2, 32, 62), which coupling device has a plurality of coupling modules (6, 8, 12, 14, 34, 36, 38, 40, 64, 66, 68, 70, 90), wherein each coupling module (6, 8, 12, 14, 34, 36, 38, 40, 64, 66, 68, 70, 90) surrounds four passage openings (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) which are arranged parallel to one another, **characterized in that** four coupling modules (6, 8, 12, 14, 34, 36, 38, 40, 64, 66, 68, 70, 90) are provided, wherein at least one section of a conductor loop (18, 20, 22, 24, 42, 44, 46, 48, 72, 74, 76, 78, 118, 120) for one phase is passed through a passage opening (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) of a coupling module (6, 8, 12, 14, 34, 36, 38, 40, 64, 66, 68, 70, 90), wherein sections of conductor loops (18, 20, 22, 24, 42, 44, 46, 48, 72, 74, 76, 78, 118, 120) for at least two phases are passed through all four passage openings (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) of a coupling module (6, 8, 12, 14, 34, 36, 38, 40, 64, 66, 68, 70, 90).

2. Coupling device according to Claim 1, in which at least one coupling module (6, 8, 12, 14, 34, 36, 38, 40, 64, 66, 68, 70, 90) forms a plane of the coupling device (4, 30, 60), wherein at least four passage openings (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) are passed through each plane, wherein at least one section of a conductor loop (18, 20, 22, 24, 42, 44, 46, 48, 72, 74, 76, 78, 118, 120) for each of the four phases is passed through passage openings (601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) of each plane.

3. Coupling device according to Claim 2, in which sections of conductor loops (18, 20, 22, 24, 42, 44, 46, 48, 72, 74, 76, 78, 118, 120) are passed through one plane, wherein, during operation of the coupling device (4, 30, 60, 90), half of the phases flow through the plane in a first direction and the other half flow through the plane in a second direction, wherein the first direction and the second direction are oriented opposite to one another.

4. Coupling device according to one of the preceding claims, in which sections of conductor loops (18, 20, 22, 24) for two phases are passed through the passage openings (601, 602, 603, 604, 801, 802, 803, 804, 1201, 1202, 1203, 1204, 1401, 1402, 1403, 1404) of each coupling module (6, 8, 12, 14), wherein at least two sections of a conductor loop (18, 20, 22, 24) of one phase are passed through each passage opening (601, 602, 603, 604, 801, 802, 803, 804, 1201, 1202, 1203, 1204, 1401, 1402, 1403, 1404).

5. Coupling device according to one of Claims 1 to 3, in which sections of conductor loops (42, 44, 46, 48, 72, 74, 76, 78) for four phases are passed through the passage openings (3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) of each coupling module (34, 36, 38, 40, 64, 66, 68, 70), wherein at least one section of a conductor loop (42, 44, 46, 48, 72, 74, 76, 78) of one phase is passed through each passage opening (3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004).

6. Coupling device according to one of the preceding claims, in which two adjacent passage openings (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) of a coupling module (6, 8, 12, 14, 34, 36, 38, 40, 64, 66, 68, 70, 90) are connected to one another by means of a slot (107, 108, 160, 161, 162, 605, 805, 1205, 1405, 3405, 3406, 3605, 3606, 3805, 3806, 4005, 4006, 6405, 6406, 6605, 6606, 6805, 6806, 7005, 7006).

7. Coupling device according to one of the preceding claims, which has two pairs of coupling modules (6, 8, 12, 14, 34, 36, 38, 40, 90), in which coupling device coupling modules (6, 8, 12, 14, 34, 36, 38, 40, 90) in each case of one pair of coupling modules (6, 8, 12, 14, 34, 36, 38, 40, 90) are arranged parallel next to one another in a manner oriented perpendicular to the passage openings (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004), wherein the two pairs are oriented in series and the passage openings (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004) of the two pairs are oriented in the same direction, and wherein the two pairs are rotated through 90° in relation to one another.

8. Coupling device according to one of the preceding claims, in which each coupling module (6, 8, 12, 14, 34, 36, 38, 40, 64, 66, 68, 70, 90) comprises ferrite material.

9. Coupling device according to one of the preceding claims, in which each coupling module (6, 8, 12, 14, 34, 36, 38, 40, 64, 66, 68, 70, 90) is of cuboidal design.

10. Multiphase converter which has at least one coupling device (4, 30, 60, 90) according to one of the preceding claims.

11. Multiphase converter according to Claim 10, which is in the form of a four-phase converter.

## Revendications

1. Dispositif de couplage destiné à quatre phases d'un convertisseur polyphasé (2, 32, 62), comportant plusieurs modules de couplage (6, 8, 12, 14, 34, 36, 38, 40, 64, 66, 68, 70, 90), dans lequel chaque module de couplage (6, 8, 12, 14, 34, 36, 38, 40, 64, 66, 68, 70, 90) entoure quatre ouvertures de traversée (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) disposées parallèlement les unes aux autres **caractérisé en ce qu'**il est prévu quatre modules de couplage (6, 8, 12, 14, 34, 36, 38, 40, 64, 66, 68, 70, 90), dans lequel au moins une partie d'une boucle conductrice (18, 20, 22, 24, 42, 44, 46, 48, 72, 74, 76, 78, 118, 120) est amenée à passer à travers une ouverture de traversée (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) d'un module de couplage (6, 8, 12, 14, 34, 36, 38, 40, 64, 66, 68, 70, 90) pour une phase, dans lequel des parties de boucles conductrices (18, 20, 22, 24, 42, 44, 46, 48, 72, 74, 76, 78, 118, 120) sont amenées à passer à travers la totalité des quatre ouvertures de traversée (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) d'un module de couplage (6, 8, 12, 14, 34, 36, 38, 40, 64, 66, 68, 70, 90) pour au moins deux phases.

2. Dispositif de couplage selon la revendication 1, dans lequel au moins un module de couplage (6, 8, 12, 14, 34, 36, 38, 40, 64, 66, 68, 70, 90) forme un plan du dispositif de couplage (4, 30, 60), dans lequel au moins quatre ouvertures de traversée (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602,(3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) sont amenées à passer à travers chaque plan, dans lequel au moins une partie d'une boucle conductrice (18, 20, 22, 24, 42, 44, 46, 48, 72, 74, 76, 78, 118, 120) est amenée à passer à travers des ouvertures de traversée (601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) de chaque plan pour chacune des quatre phases.

3. Dispositif de couplage selon la revendication 2, dans lequel des parties de boucles conductrices (18, 20, 22, 24, 42, 44, 46, 48, 72, 74, 76, 78, 118, 120) sont amenées à passer à travers un plan, dans lequel, lors du fonctionnement du dispositif de couplage (4, 30, 60, 90), la moitié des phases circulent dans une première direction et l'autre moitié circule dans une seconde direction à travers le plan, dans lequel la première direction et la seconde direction sont orientées de manière opposée l'une à l'autre.

4. Dispositif de couplage selon l'une quelconque des revendications précédentes, dans lequel des parties de boucles conductrices (18, 20, 22, 24) sont amenées à passer à travers les ouvertures de traversée (601, 602, 603, 604, 801, 802, 803, 804, 1201, 1202, 1203, 1204, 1401, 1402, 1403, 1404) de chaque module de couplage (6, 8, 12, 14) pour deux phases, dans lequel au moins deux parties d'une boucle conductrice (18, 20, 22, 24) d'une phase sont amenées à passer à travers chaque ouverture de traversée (601, 602, 603, 604, 801, 802, 803, 804, 1201, 1202, 1203, 1204, 1401, 1402, 1403, 1404).

5. Dispositif de couplage selon l'une quelconque des revendications 1 à 3, dans lequel des parties de boucles conductrices (42, 44, 46, 48, 72, 74, 76, 78) sont amenées à passer à travers les ouvertures de traversée (3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) de chaque module de couplage (34, 36, 38, 40, 64, 66, 68, 70) pour quatre phases, dans lequel au moins une partie d'une boucle conductrice (42, 44, 46, 48, 72, 74, 76, 78) d'une phase est amenée à passer à travers chaque ouverture de traversée (3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004).

6. Dispositif de couplage selon l'une quelconque des revendications précédentes, dans lequel deux ouvertures de traversée (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004, 6401, 6402, 6403, 6404, 6601, 6602, 6603, 6604, 6801, 6802, 6803, 6804, 7001, 7002, 7003, 7004) disposées côte à côte d'un module de couplage (6, 8, 12, 14, 34, 36, 38, 40, 64, 66, 68, 70, 90) sont connectées l'une à l'autre par l'intermédiaire d'une fente (107, 108, 160, 161, 162, 605, 805, 1205, 1405, 3405, 3406, 3605, 3606, 3805, 3806, 4005, 4006, 6405, 6406, 6605, 6606, 6805, 6806, 7005, 7006).

7. Dispositif de couplage selon l'une quelconque des revendications précédentes, comportant deux paires de modules de couplage (6, 8, 12, 14, 34, 36, 38, 40, 90), dans lequel des modules de couplage (6, 8, 12, 14, 34, 36, 38, 40, 90) respectifs d'une paire de modules de couplage (6, 8, 12, 14, 34, 36, 38, 40, 90) sont disposés parallèlement côte à côte de manière orientée perpendiculairement aux ouvertures de traversée (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004), dans lequel les deux paires situées l'une derrière l'autre et les ouvertures de traversée (110, 112, 114, 116, 601, 602, 603, 604, 801, 802, 803, 804, 1201, 1202, 1203, 1204, 1401, 1402, 1403, 1404, 3401, 3402, 3403, 3404, 3601, 3602, 3603, 3604, 3801, 3802, 3803, 3804, 4001, 4002, 4003, 4004) des deux paires sont orientées dans la même direction, et dans lequel les deux paires sont tournées de 90° l'une par rapport à l'autre.

8. Dispositif de couplage selon l'une quelconque des revendications précédentes, dans lequel chaque module de couplage (6, 8, 12, 14, 34, 36, 38, 40, 64, 66, 68, 70, 90) comporte un matériau de ferrite.

9. Dispositif de couplage selon l'une quelconque des revendications précédentes, dans lequel chaque module de couplage (6, 8, 12, 14, 34, 36, 38, 40, 64, 66, 68, 70, 90) est réalisé de manière à présenter une forme parallélépipédique.

10. Convertisseur polyphasé comportant au moins un dispositif de couplage (4, 30, 60, 90) selon l'une quelconque des revendications précédentes.

11. Convertisseur polyphasé selon la revendication 10, réalisé sous la forme d'un convertisseur à quatre phases.
